(19) Europäisches Patentamt
European Patent Office
Office européen des brevets

(11) **EP 4 643 651 A1**

(12) **EUROPEAN PATENT APPLICATION**
published in accordance with Art. 153(4) EPC

(43) Date of publication:
**05.11.2025 Bulletin 2025/45**

(21) Application number: **23912028.0**

(22) Date of filing: **25.12.2023**

(51) International Patent Classification (IPC):
*A23L 2/00* (2006.01)     *A23L 2/52* (2006.01)
*A23L 29/206* (2016.01)     *A23L 29/238* (2016.01)
*A23L 29/256* (2016.01)     *A23L 29/262* (2016.01)
*A23L 29/269* (2016.01)     *A61K 8/02* (2006.01)
*A61K 8/73* (2006.01)     *A61K 9/06* (2006.01)
*A61K 47/36* (2006.01)     *B33Y 10/00* (2015.01)

(52) Cooperative Patent Classification (CPC):
**A23L 2/00; A23L 2/52; A23L 29/206; A23L 29/238;
A23L 29/256; A23L 29/262; A23L 29/269;
A61K 8/02; A61K 8/73; A61K 9/06; A61K 47/36;
B33Y 10/00**

(86) International application number:
**PCT/JP2023/046322**

(87) International publication number:
**WO 2024/143248 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2022 JP 2022209772**

(71) Applicant: **Suntory Holdings Limited
Osaka-shi, Osaka 530-8203 (JP)**

(72) Inventors:
• **INOUE, Ippei
Soraku-gun, Kyoto 619-0284 (JP)**
• **SUETSUGU, Daichi
Tokyo 135-0064 (JP)**
• **KUDO, Takahiro
Tokyo 135-0064 (JP)**

(74) Representative: **Vossius & Partner
Patentanwälte Rechtsanwälte mbB
Siebertstrasse 3
81675 München (DE)**

(54) **LIQUID WITH PATTERN AND PRODUCTION METHOD FOR SAME**

(57)     The present invention aims to provide a pattern-containing liquid that contains, in a liquid matrix, a pattern that can provide color, taste, or tactile sensations such as mouthfeel and texture, and that has good stability, as well as a method for producing a pattern-containing liquid capable of stably forming the above pattern in a liquid matrix. The present invention relates to, for example, a pattern-containing liquid containing a pattern formed from at least one of a microparticulate or a colorant in a liquid matrix, the liquid matrix being a pseudoplastic fluid and contained in a container.

**Description**

TECHNICAL FIELD

The present invention relates to, for example, a pattern-containing liquid and a method for producing a pattern-containing liquid. The present invention specifically relates to, for example, a pattern-containing liquid containing a pattern such as a character or a picture in a liquid matrix and a production method therefor.

BACKGROUND ART

3D printing is a technique of forming a 3D structure by successively depositing 2D layers of material based on 3D computer-aided design (CAD) data. This technique has been used to form 3D structures of various materials such as metallic material, polymer material, food material, and cells.

Examples of techniques for 3D printing in a liquid phase proposed so far include: a technique of depositing a polymer material while exchanging liquid phases in accordance with the target conditions using a platform that allows for the exchange of liquid phases during printing, constructing a polymer structure (e.g., see Patent Literature 1); a technique of depositing a solidifying material in a highly viscous gel and solidifying the material, forming a 3D object suspended within the gel (e.g., see Patent Literature 2); and a technique of introducing, into a first fluid, a second fluid that is immiscible with the first fluid, creating a pattern in the first fluid by use of their immiscibility with each other (e.g., see Patent Literature 3). Another proposal is increasing the viscosity of the liquid to provide a stable pattern.

In order to give thick consistency to foods and drinks and improve the ease of swallowing of the foods and drinks, a thickening agent that exhibits pseudoplasticity is added to foods and drinks (e.g., see Patent Literature 4).

CITATION LIST

- Patent Literature

Patent Literature 1: US 2020/247053 A1
Patent Literature 2: US 2018/281295 A1
Patent Literature 3: WO 2018/218264
Patent Literature 4: JP 2022-530927 T

SUMMARY OF INVENTION

- Technical Problem

Still, in the case of in-liquid drawing by discharging ink through a nozzle into a highly viscous liquid, a flow generated by movement of the nozzle may change a pattern formed from the ink, unfortunately causing a failure in target drawing in some cases.

A technique of depositing a polymer material on the bottom of a container containing a fluid, as disclosed in Patent Literature 1, involves discussions about the viscosity and rheological properties of the material discharged, but does not involve consideration to the properties, such as viscosity, of a liquid into which the material is discharged. The technique disclosed in Patent Literature 2 uses a gel having a viscosity as high as from 20000 to 50000 mPa and therefore the technique is applied in a limited range. Also, this patent literature does not consider the properties of the gel, such as pseudoplasticity. Similarly, Patent Literature 3 discloses that adding a thickening agent to a liquid phase and thereby increasing the viscosity is advantageous in stabilizing a pattern in the technique disclosed, but does not consider the properties of the liquid phase, such as pseudoplasticity. Patent Literature 4 discloses adding a thickening agent to a food to control the pseudoplasticity, thereby improving the ease of swallowing. However, this patent literature does not consider in-liquid drawing and does not control the pseudoplasticity of a food or drink for drawing.

The present invention aims to provide a pattern-containing liquid that contains, in a liquid matrix, a pattern that can provide color, taste, or tactile sensations such as mouthfeel and texture, and that has good stability. The present invention also aims to provide a method for producing a pattern-containing liquid capable of stably forming the above pattern in a liquid matrix.

- Solution to Problem

The present inventors performed intensive studies to solve the above problems and found that, in producing a pattern-containing liquid containing a pattern formed from at least one of a microparticulate or a colorant in a liquid matrix, using a pseudoplastic fluid as the liquid matrix can lead to stable formation of the pattern in the liquid matrix. The present inventors also found that the pattern formed in a pseudoplastic fluid has good stability.

The present invention encompasses, but is not limited to, the pattern-containing liquid and the method for producing a pattern-containing liquid described below, for example.

[1] A pattern-containing liquid containing a pattern formed from at least one of a microparticulate or a colorant in a liquid matrix, the liquid matrix being a pseudoplastic fluid, and the liquid matrix being contained in a container.

[2] The pattern-containing liquid according to the clause [1], wherein the liquid matrix is a fluid that exhibits pseudoplasticity at least within a predetermined subrange of a shear-rate range from 0.3 to 130 s$^{-1}$.

[3] The pattern-containing liquid according to the clause [1] or [2], wherein the liquid matrix is a fluid that satisfies the following formula (I) at least within a predetermined subrange of a shear-rate range from 0.3 to 130 s$^{-1}$:

$$\log(\eta1/\eta2)/\log(\gamma1/\gamma2) \leq -0.12 \quad \text{Formula (I)}$$

wherein $\eta1$ represents a viscosity (mPa·s) of the fluid at a shear rate $\gamma1$ (s$^{-1}$); $\eta2$ represents a viscosity (mPa·s) of the fluid at a shear rate $\gamma2$ (s$^{-1}$); and $\gamma1$ and $\gamma2$ satisfy $0.3 \leq \gamma2 < \gamma1 \leq 130$, the viscosities being those at 25°C.

[4] The pattern-containing liquid according to any one of the clauses [1] to [3], wherein the liquid matrix has a viscosity of 4 mPa·s or higher at a shear rate of 100 s$^{-1}$ and at 25°C, with the viscosity being determined from a linear approximation formula of a logarithm of the shear rate and a logarithm of the viscosity.

[5] The pattern-containing liquid according to any one of the clauses [1] to [4], wherein the liquid matrix contains water and a water-soluble thickening agent.

[6] The pattern-containing liquid according to the clause [5], wherein the water-soluble thickening agent is at least one selected from the group consisting of xanthan gum, gellan gum, locust bean gum, tara gum, and carrageenan.

[7] The pattern-containing liquid according to any one of the clauses [1] to [6], wherein the pattern-containing liquid is a beverage.

[8] A method for producing a pattern-containing liquid, the method comprising discharging a pattern-forming material containing at least one of a microparticulate or a colorant dispersed in a dispersion medium into a liquid matrix contained in a container using a nozzle to form a pattern of the at least one of the microparticulate or the colorant in the liquid matrix, the liquid matrix being a pseudoplastic fluid.

[9] The method for producing a pattern-containing liquid according to the clause [8], wherein the dispersion medium is a pseudoplastic fluid.

[10] Use of a pseudoplastic fluid as a matrix of a pattern-containing liquid.

- Advantageous Effects of Invention

The present invention can provide a pattern-containing liquid that contains, in a liquid matrix, a pattern that can provide color, taste, or tactile sensations such as mouthfeel and texture, and that has good stability. The present invention can also provide a method for producing a pattern-containing liquid capable of stably forming the above pattern in a liquid matrix.

BRIEF DESCRIPTION OF THE DRAWINGS

FIG. 1 is a conceptual diagram of an example of a device for producing a pattern-containing liquid in which a pattern is formed in a liquid matrix.

FIG. 2 is a conceptual diagram of an example of a device for producing a pattern-containing liquid in which a gantry system is used.

FIG. 3 is a conceptual diagram of an example of a device for producing a pattern-containing liquid in which a robot arm is used.

FIG. 4 is a schematic perspective view of a device prototype in Reference Example 1 for producing a pattern-containing liquid.

FIG. 5 is a graph of the relationship between the viscosity of each of liquids (CMC-a and CMC-b) used for drawing in Example 1 and the shear rate (square: CMC-a, circle (○): CMC-b).

FIG. 6A and FIG. 6B are photographs of patterns drawn in liquids in Example 1, each of which is taken from a side of a container (with the drawing surface observed from the front) (FIG. 6A: CMC-a, FIG. 6B: CMC-b).

FIG. 7 is a graph of the relationship between the viscosity of each of Samples T1 to T3 prepared in Example 2 and the shear rate (□: Sample T1, △: Sample T2, ◊: Sample T3).

FIG. 8 is a graph of the relationship between the viscosity of each of Samples T4 and T5 prepared in Example 2 and the shear rate (□: Sample T4, △: Sample T5).

FIG. 9 is a graph of the relationship between the viscosity of each of Samples T6 to T8 prepared in Example 2 and the shear rate (o: Sample T6, □: Sample T7, ◊: Sample T8).

FIG. 10 is a graph of the relationship between the viscosity of Sample T9 prepared in Example 2 and the shear rate (•: Sample T9).

FIG. 11 is a graph of the relationship between the viscosity of Sample T10 prepared in Example 2 and the shear rate (∘: Sample T10).

FIG. 12 is a graph of the relationship between the viscosity of each of Samples T11 to T14 prepared in Example 2 and the shear rate (∘: Sample T11, □: Sample T12, △: Sample T13, ◊: Sample T14).

FIG. 13A and FIG. 13B are schematic diagrams of a pattern drawn in Example 2.

FIG. 14 is a graph of the relationship between the slope $(\Delta\log\eta)/(\Delta\log\gamma)$ of each liquid used for drawing in Example 2 and the stability of a pattern in the liquid, wherein $\log\eta$ represents the logarithm of the viscosity $\eta$ of the liquid and $\log\gamma$ represents the logarithm of the shear rate $\gamma$.

FIG. 15 is a graph of the relationship between the (calculated) viscosity, at a shear rate of $100\ \text{s}^{-1}$ and at 25°C, of each liquid used for drawing in Example 2 and the stability of a pattern in the liquid.

FIG. 16 is a graph of the relationship among the slope between the logarithm $(\Delta\log\eta)$ of the viscosity $\eta$ of each liquid used for drawing in Example 2 and the logarithm $(\Delta\log\gamma)$ of the shear rate $\gamma$, the viscosity, and the stability of a pattern in the liquid.

FIG. 17 is a graph of the relationship between the viscosity of each of Samples T15 to T18 prepared in Example 3 and the shear rate (black square: Sample T15, •: Sample T16, □: Sample T17, ∘: Sample T18).

FIG. 18 is a graph of the relationship between the slope $(\Delta\log\eta)/(\Delta\log\gamma)$ of each liquid used for drawing in Example 3 and the stability of a pattern in the liquid, wherein $\log\eta$ represents the logarithm of the viscosity $\eta$ of the liquid and $\log\gamma$ represents the logarithm of the shear rate $\gamma$.

FIG. 19 is a graph of the relationship between the (calculated) viscosity, at a shear rate of $100\ \text{s}^{-1}$ and at 25°C, of each liquid used for drawing in Example 3 and the stability of a pattern in the liquid.

FIG. 20 is a graph of the relationship among the slope between the logarithm $(\Delta\log\eta)$ of the viscosity $\eta$ of each liquid used for drawing in Example 3 and the logarithm $(\Delta\log\gamma)$ of the shear rate $\gamma$, the viscosity, and the stability of a pattern in the liquid.

FIG. 21 is a schematic diagram of a pattern drawn in Example 4.

FIG. 22A and FIG. 22B are graphs of the relationship between the slope $(\Delta\log\eta)/(\Delta\log\gamma)$ of each liquid used for drawing in Example 4 and the stability of a pattern in the liquid, wherein the slope is calculated from the logarithm $(\log\eta)$ of the viscosity $\eta$ of the liquid and the logarithm $(\log\gamma)$ of the shear rate $\gamma$.

FIG. 23A and FIG. 23B are graphs of the relationship between the (calculated) viscosity, at a shear rate of $100\ \text{s}^{-1}$ and at 25°C, of each liquid used for drawing in Example 4 and the stability of a pattern in the liquid.

FIG. 24 is a graph of the relationship between the viscosity of an aqueous glycerol solution (final glycerol concentration 20 wt%) with xanthan gum added thereto and the shear rate (black square: 0.02 wt% aqueous solution with xanthan gum, ∘: 0.03 wt% aqueous solution with xanthan gum, •: 0.05 wt% aqueous solution with xanthan gum, triangle: aqueous glycerol solution without xanthan gum).

FIG. 25A, FIG. 25B, and FIG. 25C are photographs of dot patterns drawn in Example 5.

FIG. 26 is a graph of the change over time of the length of each dot pattern in the vertical direction drawn in Example 5 (**: $p < 0.01$).

## DESCRIPTION OF EMBODIMENTS

The pattern-containing liquid of the present invention is a pattern-containing liquid containing a pattern formed from at least one of a microparticulate or a colorant in a liquid matrix, the liquid matrix being a pseudoplastic fluid, and the liquid matrix being contained in a container.

In the pattern-containing liquid of the present invention, the pattern is formed from at least one of a microparticulate or a colorant in a liquid matrix. This pattern formed from at least one of a microparticulate or a colorant is also simply referred to as a pattern.

In the present invention, the liquid matrix is a pseudoplastic fluid. The "pseudoplastic" refers to a property that causes a viscosity to decrease in response to an increase in the shear rate. The pseudoplastic fluid is a type of non-Newtonian fluid and refers to a fluid whose viscosity decreases in response to an increase in the shear rate. In other words, fluids having pseudoplasticity are referred to as pseudoplastic fluids.

The fact that the liquid matrix is a pseudoplastic fluid can be verified from at least two shear rates measured using a commercially available B-type viscometer well-known to those skilled in the art and the viscosities at these shear rates.

In the pattern-containing liquid of the present invention, the pattern is formed from at least one of a microparticulate or a colorant in the liquid matrix. Being a pseudoplastic fluid, the liquid matrix is less likely to cause a pattern formed in the liquid matrix to move (e.g., float, sink, or diffuse) in comparison with the case of being a fluid that exhibits no pseudoplasticity. Thus, in the pattern-containing liquid of the present invention, the pattern in the liquid matrix is less likely to change in position and shape and has good stability. In the pattern-containing liquid of the present invention, for example, the pattern has improved stability even with a liquid matrix having a low viscosity in comparison with a pattern formed in a liquid that exhibits no pseudoplasticity.

In the present invention, the liquid matrix is commonly a liquid that exhibits pseudoplasticity (has pseudoplasticity). The liquid matrix is preferably a liquid that exhibits pseudoplasticity at least at one point within a temperature range from 1°C to 90°C, more preferably a liquid that exhibits pseudoplasticity at least at 25°C.

The liquid matrix is preferably a liquid (in the form of liquid) at 1°C to 90°C, for example.

In the present invention, the liquid matrix is preferably a fluid that exhibits pseudoplasticity at least within a predetermined subrange of a shear-rate range from 0.1 to 130 $s^{-1}$, more preferably at least within a predetermined subrange of a shear-rate range from 0.3 to 130 $s^{-1}$, still more preferably at least within a predetermined subrange of a shear-rate range from 1 to 100 $s^{-1}$. In an embodiment, for example, the liquid matrix is preferably a fluid that exhibits pseudoplasticity within a shear-rate range including 10 to 20 $s^{-1}$ and/or 30 to 50 $s^{-1}$. For example, the liquid matrix is more preferably a fluid that exhibits pseudoplasticity within at least one of shear-rate ranges from 0.3 to 20 $s^{-1}$, from 3 to 65 $s^{-1}$, from 10 to 34 $s^{-1}$, from 10 to 90 $s^{-1}$, and from 26 to 130 $s^{-1}$. In an embodiment, the liquid matrix is still more preferably a fluid that exhibits pseudoplasticity at least within a predetermined subrange of a shear-rate range from 10 to 90 $s^{-1}$, further preferably a fluid that exhibits pseudoplasticity within a shear-rate range from 10 to 20 $s^{-1}$ (preferably 10 to 30 $s^{-1}$, more preferably 10 to 34 $s^{-1}$), particularly preferably a fluid that exhibits pseudoplasticity within a shear-rate range from 10 to 90 $s^{-1}$.

In the present invention, the liquid matrix is preferably a fluid that satisfies the following formula (I) at least within a predetermined subrange of a shear-rate range from 0.3 to 130 $s^{-1}$:

$$\log(\eta 1/\eta 2)/\log(\gamma 1/\gamma 2) \leq -0.12 \quad \text{Formula (I)}$$

wherein $\eta 1$ represents a viscosity (mPa·s) of the fluid at a shear rate $\gamma 1$ ($s^{-1}$); $\eta 2$ represents a viscosity (mPa·s) of the fluid at a shear rate $\gamma 2$ ($s^{-1}$); and $\gamma 1$ and $\gamma 2$ satisfy $0.3 \leq \gamma 2 < \gamma 1 \leq 130$, the viscosities being those at 25°C.

The viscosity of the liquid matrix is measured using a B-type viscometer (e.g., rotational viscometer ViscoQC 300-L, Anton Paar). The pseudoplastic fluid is preferably a fluid that satisfies the above formula (I) at least within a predetermined subrange of a shear-rate range from 0.3 to 130 $s^{-1}$.

The left-hand side of the formula (I) represents the slope $(\log\eta 1 - \log\eta 2)/(\log\gamma 1 - \log\gamma 2)$ of a straight line between the point $(\log\gamma 2, \log\eta 2)$ and the point $(\log\gamma 1, \log\eta 1)$ on a graph where the x-axis represents the logarithm $(\log\gamma)$ of the shear rate $\gamma$ and the y-axis represents the logarithm $(\log\eta)$ of the viscosity $\eta$ of a liquid at the corresponding shear rate. The phrase "satisfies the above formula (I) at least within a predetermined subrange of a shear-rate range from 0.3 to 130 $s^{-1}$" means that, at least at two shear rates $\gamma 1$ ($s^{-1}$) and $\gamma 2$ ($s^{-1}$) ($0.3 \leq \gamma 2 < \gamma 1 \leq 130$) within a shear-rate range from 0.3 to 130 $s^{-1}$, the viscosity $\eta 1$ (mPa·s) at $\gamma 1$ ($s^{-1}$) and the viscosity $\eta 2$ (mPa·s) at $\gamma 2$ ($s^{-1}$) satisfy the above formula (I).

The liquid matrix is preferably a fluid giving a value of -0.12 or smaller on the left-hand side of the formula (I) at least between the two points ($\gamma 2$ ($s^{-1}$) and $\gamma 1$ ($s^{-1}$)) within a shear-rate range from 0.3 to 130 $s^{-1}$. In the formula (I), $\log(\eta 1/\eta 2)/\log(\gamma 1/\gamma 2)$ is preferably -2 or greater and -0.12 or smaller ($-2 \leq \log(\eta 1/\eta 2)/\log(\gamma 1/\gamma 2) \leq -0.12$).

The logarithm herein refers to the common logarithm.

In the formula (I), $\gamma 1$ and $\gamma 2$ satisfy $0.3 \leq \gamma 2 < \gamma 1 \leq 130$.

A fluid giving a value of -0.1 or smaller on the left-hand side $(\log(\eta 1/\eta 2)/\log(\gamma 1/\gamma 2))$ of the formula (I) is regarded as exhibiting pseudoplasticity within a shear-rate range of $\gamma 1$ ($s^{-1}$) or higher and $\gamma 2$ ($s^{-1}$) or lower. In the case where the liquid matrix gives a value of -0.12 or smaller on the left-hand side $(\log(\eta 1/\eta 2)/\log(\gamma 1/\gamma 2))$ of the formula (I) at least within a predetermined subrange of a shear-rate range from 0.3 to 130 $s^{-1}$, a pattern in the liquid matrix is more stable. In an embodiment, the $\log(\eta 1/\eta 2)/\log(\gamma 1/\gamma 2)$ value of the formula (I) is preferably -2 or greater, more preferably -1.5 or greater, still more preferably -1 or greater, while more preferably -0.16 or smaller, still more preferably -0.17 or smaller, further preferably smaller than -0.17, particularly preferably -0.2 or smaller, most preferably -0.4 or smaller. In an embodiment, the $\log(\eta 1/\eta 2)/\log(\gamma 1/\gamma 2)$ value of the formula (I) is preferably -2 or greater and -0.16 or smaller ($-2 \leq \log(\eta 1/\eta 2)/\log(\gamma 1/\gamma 2) \leq -0.16$), more preferably -2 or greater and -0.17 or smaller ($-2 \leq \log(\eta 1/\eta 2)/\log(\gamma 1/\gamma 2) \leq -0.17$), still more preferably -2 or greater and smaller than -0.17 ($-2 \leq \log(\eta 1/\eta 2)/\log(\gamma 1/\gamma 2) < -0.17$), further preferably -2 or greater and -0.2 or smaller ($-2 \leq \log(\eta 1/\eta 2)/\log(\gamma 1/\gamma 2) \leq -0.2$), particularly preferably -1.5 or greater and -0.4 or smaller ($-1.5 \leq \log(\eta 1/\eta 2)/\log(\gamma 1/\gamma 2) \leq -0.4$), most preferably -1 or greater and -0.4 or smaller ($-1 \leq \log(\eta 1/\eta 2)/\log(\gamma 1/\gamma 2) \leq -0.4$).

In an embodiment, the difference between $\gamma 1$ and $\gamma 2$ ($\gamma 1 - \gamma 2$) ($s^{-1}$) is preferably 10 to 104 ($s^{-1}$), more preferably 20 to 104 ($s^{-1}$), still more preferably 20 to 80 ($s^{-1}$), particularly preferably 62 to 80 ($s^{-1}$).

In an embodiment, the liquid matrix is preferably a fluid that satisfies the formula (I) within a shear-rate range from 10 to 20 $s^{-1}$ (in the formula (I), $\gamma 1$ is 20 ($s^{-1}$) and $\gamma 2$ is 10 ($s^{-1}$)) and/or within a shear-rate range from 30 to 50 $s^{-1}$ (in the formula (I), $\gamma 1$ is 50 ($s^{-1}$) and $\gamma 2$ is 30 ($s^{-1}$)). The liquid matrix is preferably a fluid that satisfies the formula (I) within at least one of the following shear-rate ranges.

a shear rate of 0.3 to 20 $s^{-1}$ (in the formula (I), $\gamma 1$ is 20 ($s^{-1}$) and $\gamma 2$ is 0.3 ($s^{-1}$))
a shear rate of 3 to 65 $s^{-1}$ (in the formula (I), $\gamma 1$ is 65 ($s^{-1}$) and $\gamma 2$ is 3 ($s^{-1}$))
a shear rate of 10 to 34 $s^{-1}$ (in the formula (I), $\gamma 1$ is 34 ($s^{-1}$) and $\gamma 2$ is 10 ($s^{-1}$))
a shear rate of 10 to 90 $s^{-1}$ (in the formula (I), $\gamma 1$ is 90 ($s^{-1}$) and $\gamma 2$ is 10 ($s^{-1}$))
a shear rate of 26 to 130 $s^{-1}$ (in the formula (I), $\gamma 1$ is 130 ($s^{-1}$) and $\gamma 2$ is 26 ($s^{-1}$))

In an embodiment, the liquid matrix is preferably a fluid that satisfies the formula (I) between the above $\gamma 2$ ($s^{-1}$) and $\gamma 1$ ($s^{-1}$).

In an embodiment, the liquid matrix is preferably a fluid that satisfies the formula (I) within a shear-rate range from 10 to 90 $s^{-1}$. In this case, in the formula (I), $\gamma 1$ is 90 ($s^{-1}$) and $\gamma 2$ is 10 ($s^{-1}$).

The liquid matrix is preferably a liquid containing water, more preferably a water-based liquid. The pseudoplasticity can be imparted by, for example, mixing the liquid with a thickening agent. In the present invention, the thickening agent is preferably a water-soluble thickening agent. In an embodiment, the liquid matrix preferably contains water and a water-soluble thickening agent, and is more preferably an aqueous solution containing a water-soluble thickening agent.

Examples of the liquid to be used for the liquid matrix include liquid foods and drinks such as beverages, liquid oral pharmaceuticals and liquid oral quasi-drugs (e.g., liquid medicines and drink supplements), perfumes, cosmetics (skin cosmetics such as skin toners and lotions), liquid parenteral pharmaceuticals and liquid parenteral quasi-drugs (e.g., eye drops and nasal sprays), and liquids such as water in water tanks. The liquid matrix may be a liquid suitable for cell growth and maintenance, such as a culture medium or buffer. The liquid matrix may be one obtained by mixing such a liquid with the thickening agent. The thickening agent is preferably dissolved or uniformly dispersed in the liquid matrix.

In an embodiment, the liquid matrix is preferably edible. The "edible" herein means that the substance can be eaten by a human, regardless of whether a human can digest it and whether a human can absorb it.

In an embodiment, an edible liquid matrix is preferably one obtained by mixing a drink with an edible water-soluble thickening agent and thereby providing pseudoplasticity. In an embodiment, the liquid matrix is preferably a drink containing a water-soluble thickening agent. Examples of the drink include water; tea; coffee; soft drinks such as fruit juice drinks, soda drinks, functional drinks, sports drinks, energy drinks, and alcohol-free drinks; alcoholic drinks; quasi-drug energy drinks; milk; soy milk; soups; smoothie; frozen drinks; and milk shakes.

Examples of the water-soluble thickening agent include xanthan gum, gellan gum, carboxymethyl cellulose, locust bean gum, tara gum, and carrageenan. One water-soluble thickening agent may be used alone or two or more water-soluble thickening agents may be used in combination. In particular, the water-soluble thickening agent is preferably at least one selected from the group consisting of carboxymethyl cellulose, xanthan gum, gellan gum, locust bean gum, tara gum, and carrageenan, more preferably at least one selected from the group consisting of xanthan gum, gellan gum, locust bean gum, tara gum, and carrageenan. The presence of at least one selected from the group consisting of xanthan gum, gellan gum, locust bean gum, tara gum, and carrageenan in the liquid matrix is preferred because a pattern can have better stability. The pseudoplastic fluid in the present invention is preferably a liquid containing water and the above water-soluble thickening agent.

Xanthan gum is a polysaccharide and can be produced by fermenting saccharides such as starch with a microorganism *Xanthomonas campestris.* Xanthan gum used may be one produced by a common method using this microorganism or may be a commercially available product. Examples of commercially available products include SANACE (San-Ei Gen F.F.I., Inc.) and CX930QD (Unitec Foods Co., Ltd.)

Gellan gum is a polysaccharide obtained by fermentation. Gellan gum can be produced using a microorganism *Sphingomonas elodea.* In the present invention, gellan gum encompasses acyl-rich HA gellan gum and acyl-removed LA gellan gum. Preferred is acyl-rich HA gellan gum. Gellan gum used may be one produced by a common method or may be a commercially available product. Examples of commercially available products include KELCOGEL LT-1000 (San-Ei Gen F.F.I., Inc.), KELCOGEL HM (San-Ei Gen F.F.I., Inc.), and GELUP MOT(D) (San-Ei Gen F.F.I., Inc.).

Locust bean gum is a seed mucilage obtained from cotyledons of *Ceratonia siliqua,* a plant in the pea family, and is a galactomannan as well as a plant-based water-soluble polymer that includes repeating units each having a structure of linear main chain of four mannose units with a side chain of one galactose unit. Examples of commercially available products include SOALOCUST (Mitsubishi Chemical Corp.) as well as A-200 and B-175 (Maruo Trading Co.).

Tara gum is a neutral polysaccharide obtained from endosperm of seeds of Tara, a plant in the pea family, and is a galactomannan as well as a plant-based water-soluble polymer that includes repeating units each having a structure of linear main chain of three mannose units with a side chain of one galactose unit. Examples of commercially available products include TARA GUM (Mitsubishi Chemical Corp.) and TARA GUM (Ina Food Industry Co., Ltd.).

Carrageenan is a polysaccharide extracted from red algae and has a structure in which a sulfate group is attached to a galactose group. Examples of commercially available products include SOAGEENA (Mitsubishi Chemical Corp.) and purified carrageenan (Marugo Co.).

The concentration (amount) of the water-soluble thickening agent in the liquid matrix is such that the liquid matrix exhibits pseudoplasticity, and can be controlled as appropriate in accordance with the type of the water-soluble thickening agent, for example. Preferably, parameters such as the concentration of the water-soluble thickening agent are adjusted so that the liquid matrix exhibits pseudoplasticity at least at a temperature of 25°C.

In an embodiment where the liquid matrix contains at least one water-soluble thickening agent selected from the group consisting of xanthan gum, gellan gum, locust bean gum, tara gum, and carrageenan, the total concentration of the water-soluble thickening agent is preferably 0.01 to 2 wt%, more preferably 0.02 to 1 wt%. In an embodiment where the liquid matrix contains xanthan gum, the concentration of xanthan gum is preferably 0.01 to 2 wt%, more preferably 0.01 to 1 wt%. In the case where the liquid matrix contains gellan gum, the concentration of gellan gum is preferably 0.01 to 1 wt%, more preferably 0.02 to 0.5 wt%, still more preferably 0.02 to 0.4 wt%. In the case where the liquid matrix contains locust bean gum, the concentration of locust bean gum is preferably 0.01 to 2 wt%, more preferably 0.01 to 1 wt%, still more preferably 0.1 to 1 wt%. In the case where the liquid matrix contains tara gum, the concentration of tara gum is preferably 0.01 to 2 wt%, more preferably 0.01 to 1 wt%, still more preferably 0.1 to 1 wt%. In the case where the liquid matrix contains carrageenan, the concentration of carrageenan is preferably 0.01 to 2 wt%, more preferably 0.01 to 1 wt%, still more preferably 0.1 to 1 wt%.

To make a pattern of at least one of a microparticulate or a colorant visible from the outside of the liquid matrix, the liquid matrix preferably has transparency that allows the pattern to be visible.

In an embodiment of the present invention, for example, the liquid matrix preferably has a viscosity of 4 mPa·s or higher at a shear rate of 100 s$^{-1}$ and at 25°C, with the viscosity being determined from a linear approximation formula of a logarithm of the shear rate and a logarithm of the viscosity. This is because a viscosity at a shear rate of 100 s$^{-1}$ and at 25°C of 4 mPa·s or higher allows a pattern formed in the liquid matrix to be more stable. A viscosity at a shear rate of 100 s$^{-1}$ and at 25°C of 4 mPa·s or higher also allows for more stable formation of a pattern in the liquid matrix using a pattern-forming material to be described later. The viscosity at a shear rate of 100 s$^{-1}$ and at 25°C of the liquid matrix is more preferably 7 mPa·s or higher, still more preferably 10 mPa·s or higher, particularly preferably 15 mPa·s or higher, while preferably 6000 mPa·s or lower, more preferably 1000 mPa·s or lower, still more preferably 150 mPa·s or lower, particularly preferably 100 mPa·s or lower. In an embodiment, the viscosity at a shear rate of 100 s$^{-1}$ and at 25°C of the liquid matrix is preferably 4 to 6000 mPa·s, more preferably 7 to 1000 mPa·s, still more preferably 10 to 1000 mPa·s, further preferably 15 to 1000 mPa·s, particularly preferably 15 to 150 mPa·s, most preferably 15 to 100 mPa·s.

In the present invention, the "viscosity at a shear rate of 100 s$^{-1}$ and at 25°C determined from a linear approximation formula of the logarithm of the shear rate and the logarithm of the viscosity" is the viscosity at a shear rate of 100 s$^{-1}$ and at 25°C determined from a linear approximation formula obtained by measuring the viscosity of the liquid matrix, calculating the logarithm of the measured shear rate and the logarithm of the viscosity at the shear rate, and subjecting these logarithm values to linear regression analysis. Specifically, this viscosity refers to the (calculated) viscosity at a shear rate of 100 s$^{-1}$ and at 25°C determined by the following method.

(1) Measure the viscosity ($\eta$) at 25°C at three or more points within a shear-rate ($\gamma$) range from 0.3 to 130 s$^{-1}$.
(2) Calculate the logarithm ($\log\gamma$) of each shear rate and the logarithm ($\log\eta$) of each viscosity measured in the step (1), and subject these values to linear regression analysis, determining a linear approximation formula of $\log\gamma$ and $\log\eta$.
(3) Using the linear approximation formula determined in the step (2), calculate the viscosity at a shear rate of 100 s$^{-1}$ and at 25°C.

In the step (1), the difference ($\gamma_{max}$ - $\gamma_{min}$) between the maximum value ($\gamma_{max}$) and minimum value ($\gamma_{min}$) of the shear rate ($\gamma$) used for measuring the viscosity is preferably 10 s$^{-1}$ or higher, more preferably 20 s$^{-1}$ or higher, still more preferably 60 s$^{-1}$ or higher, while preferably 104 s$^{-1}$ or lower, preferably 80 s$^{-1}$ or lower. In an embodiment, the difference ($\gamma_{max}$ - $\gamma_{min}$) may be 10 to 104 s$^{-1}$, 10 to 80 s$^{-1}$, 20 to 80 s$^{-1}$, or 60 to 80 s$^{-1}$. In an embodiment, preferably, the viscosity at 25°C is measured at three or more points within a shear-rate range including a subrange from 10 to 20 s$^{-1}$, and then the viscosity at a shear rate of 100 s$^{-1}$ and at 25°C is determined.

In an embodiment, the viscosity at a shear rate of 10 s$^{-1}$ and at 25°C of the liquid matrix is preferably 10 mPa·s or higher, more preferably 10 to 7000 mPa·s, still more preferably 10 to 500 mPa·s. The viscosity at a shear rate of 10 s$^{-1}$ and at 25°C can be measured using a B-type viscometer (e.g., rotational viscometer ViscoQC 300-L, Anton Paar) by rotating at 25°C the spindle such that the shear rate is 10 s$^{-1}$. This is because a viscosity at a shear rate of 10 s$^{-1}$ and at 25°C within the above range allows a pattern in the liquid matrix to have better stability. In the present invention, a liquid matrix having a low viscosity also allows the pattern to have good stability. In the present invention, for example, a liquid matrix that is a liquid having a viscosity at a shear rate of 10 s$^{-1}$ and at 25°C of 10 to 500 mPa·s also allows the pattern to have good stability. A liquid matrix having a high viscosity leads to better stability of the pattern.

The viscosity can be adjusted by adjusting the amount of the thickening agent contained. In an embodiment, the liquid matrix is preferably caused to contain the water-soluble thickening agent such that the viscosity at a shear rate of 100 s$^{-1}$ and at 25°C of the liquid matrix falls within the above range. In an embodiment, the liquid matrix is preferably caused to contain the water-soluble thickening agent such that the viscosity at a shear rate of 10 s$^{-1}$ and at 25°C falls within the above range.

The liquid matrix has a density of preferably 0.9 to 1.1 g/mL, more preferably 1 to 1.1 g/mL. The "density" means the weight per unit volume. The density herein refers to the density at 25°C, unless otherwise mentioned. The density of liquids such as the liquid matrix can be measured using a density meter (e.g., DMA 4500 M, Anton Paar GmbH).

In the pattern-containing liquid of the present invention, the pattern is formed from at least one of a microparticulate or a colorant in the liquid matrix. The microparticulate and the colorant to form a pattern in the liquid matrix are also referred to as a first microparticulate and a first colorant, respectively.

The pattern may be any of a 1D pattern (line), a 2D pattern (plane), and a 3D pattern (solid). Examples of the type of the pattern include, but are not limited to: patterns with color such as lines, pictures, and symbols including characters; patterns providing taste, aroma, mouthfeel, texture and so on; and patterns generating these in combination.

The pattern in the liquid matrix may be in contact with the inside of the container that contains the liquid matrix, or may not be in contact with the inside of the container. The pattern may float in the liquid matrix.

The pattern is formed from at least one of a microparticulate or a colorant.

Examples of the colorant include, but are not limited to, a red colorant, a yellow colorant, a blue colorant, a green colorant, a black colorant, and a white colorant. One of these may be used alone or two or more of these may be used in combination.

Examples of the colorant include natural colorants such as capsicum pigment, gardenia pigment, monascus pigment, chlorophyll, β-carotene, astaxanthin, squid ink pigment, caramel color, tomato pigment, paprika pigment, safflower pigment, and chlorella pigment; azo dye; and inorganic pigment. Examples of the inorganic pigments include titanium dioxide, silica, and carbon fine particles. Examples of the azo dye include Food Red No. 2, Food Red No. 3, Food Red No. 40, Food Red No. 102, Food Red No. 104, Food Red No. 105, Food Red No. 106, Food Yellow No. 4, Food Yellow No. 5, Food Green No. 3, Food Blue No. 1, and Food Blue No. 2.

The colorant is preferably an edible colorant.

The microparticulate is a micro-sized particulate. The particle structure of the microparticulate may be, but is not limited to, a uniform structure, a core-shell structure, or a Janus structure.

The microparticulate is preferably insoluble or slightly soluble in the liquid matrix. This allows a pattern formed from the microparticulate to be maintained in the liquid matrix for a long term.

The individual particles of the microparticulate of the pattern are preferably not chemically bonded to each other with a cross-linker. This is because such a pattern of the microparticulate does not form a mass. Thereby, in the case where the pattern-containing liquid is a beverage, for example, the pattern is more easily drinkable with the liquid matrix.

The diameter of the microparticulate may be 0.13 μm or greater, for example, and is preferably 0.2 μm or greater and 1000 μm or smaller. This is because the microparticulate having a diameter of, for example, 0.13 μm or greater, preferably 0.2 μm or greater, allows a pattern formed from the microparticulate to be more stable in the liquid matrix. With a diameter of 1000 μm or smaller, the microparticulate can be less likely to give grainy texture when put into a mouth (for example, see The bulletin of Hachinohe Institute of Technology, 2007, Vol. 26, pp. 9-13). From this viewpoint, the diameter of the microparticulate is more preferably 100 μm or smaller. The diameter of the microparticulate is more preferably 0.3 μm or greater, still more preferably 0.5 μm or greater, while still more preferably 50 μm or smaller. In an embodiment, the diameter of the microparticulate is preferably 0.13 to 1000 μm, more preferably 0.2 to 1000 μm, still more preferably 0.3 to 100 μm, particularly preferably 0.5 to 50 μm.

The "diameter of the microparticulate" herein means the mode diameter in the particle size distribution of the microparticulate measured by dynamic light scattering (DLS).

The ratio of the density of the microparticulate to the density of the liquid matrix (density of microparticulate/density of liquid matrix) is preferably 0.9 or higher and 1.1 or lower. A density ratio of 0.9 or higher and 1.1 or lower can more reduce floating or sinking of a pattern formed from the microparticulate in the liquid matrix. From this viewpoint, the density ratio (density of microparticulate/density of liquid matrix) is more preferably 0.92 or higher and 1.08 or lower, still more preferably 0.95 or higher and 1.05 or lower.

The "density of the microparticulate" herein means the density corresponding to the smallest density among the densities obtained as follows: microparticulate (or a material containing a microparticulate, which is to be described later, dispersed therein) is added dropwise to solutions (e.g., aqueous glycerol solutions) of various concentrations and centrifuged under predetermined conditions (e.g., at 18500 × g for one minute); and the smallest density is then selected from the densities of the solutions in which no sinking of the microparticulate is observed.

The microparticulate is preferably a microparticulate containing an organic substance. The microparticulate in the present invention is preferably an organic microparticulate. The organic microparticulate refers to a particulate containing an organic substance as a main component for forming the particle shape of the particulate. The organic substance is preferably an edible organic substance. The microparticulate in the present invention is more preferably an edible organic microparticulate.

The microparticulate preferably contains at least one component selected from the group consisting of a colorant, a taste component, a nutrient, and a flavor component. The presence of these additives in the microparticulate allows a pattern of the microparticulate to have a design with a variety of spatial senses. For example, in the presence of a colorant, a pattern of the microparticulate can exhibit a spatial color design; in the presence of a taste component, a pattern of the microparticulate can provide a spatial taste design; in the presence of a nutrient, a pattern of the microparticulate can provide a spatial nutrient design; and in the presence of a flavor component, a pattern of the microparticulate can provide a spatial fragrant design. Examples of the colorant include the colorants mentioned above. Examples of the taste component include sucrose, fructose, table salt, glucose, amino acids, nucleic acids, acetic acid, malic acid, citric acid, caffeine, tannin, capsaicin, glycerol, and food extracts. Examples of the nutrient include vitamins, minerals, lipids, fatty acids, polypeptides, sugars, healthy material molecules, and food extracts. Examples of the flavor component include food flavoring compounds designated in Appended Table 1 of Ordinance for Enforcement of the Food Sanitation Act, such as vanillin, eugenol, geraniol, and citral, and food extracts. The microparticulate may include multiple types of particles which are different in terms of the presence or absence of colorant or in terms of the types of colorants contained (e.g., different colors). The same applies to the taste component, the nutrient, and the flavor component. The microparticulate may include multiple types of particles which are different in terms of the presence or absence of these additives or in terms of the types of additives contained.

In an embodiment, the microparticulate preferably contains at least one of silica (silicon dioxide) or titania (titanium dioxide). The microparticulate containing these additives can better express a white color and can better develop other colors.

The microparticulate may contain a hydrophobic substance or a hydrophilic substance for maintaining the aforementioned additives such as colorant and silica in the microparticulate. The microparticulate may have a structure in which a layer containing a hydrophobic substance and a layer containing a hydrophilic substance are alternately arranged from the center to the outside, such as a trilayer structure of a hydrophilic substance, a hydrophobic substance, and a hydrophilic substance or of a hydrophobic substance, a hydrophilic substance, and a hydrophobic substance.

In the case where the microparticulate contains an edible organic substance, the edible organic substance is preferably a substance that is to function as a main component for forming the particle shape of the microparticulate. The edible organic substance may have any molecular weight, and the edible organic substance is preferably a high molecular weight substance.

The edible organic substance is preferably at least one edible organic substance selected from the group consisting of a polysaccharide, polypeptide, higher alcohol, natural resin, lipid, higher fatty acid ester, polyphenol, polyvinyl alcohol, polyethylene glycol, and nucleic acid (DNA). The "polysaccharide" herein means a sugar in which multiple (two or more molecules of) monosaccharides are bonded to each other. The "polypeptide" herein means a compound in which many amino acids are strung by peptide bonds, and encompasses proteins.

Preferred specific examples of the polysaccharide include dextrin, pectin, agar, agarose, glucomannan, polydextrose, maltodextrin, alginic acid (e.g., sodium alginate, calcium alginate), cellulose, hemicellulose, chitin, chitosan, starch (e.g., amylum), dextran, agarose, sucrose, methyl cellulose, carboxymethyl cellulose, and hydroxypropyl cellulose. One polysaccharide may be used alone or two or more polysaccharides may be used in combination.

Preferred specific examples of the polypeptide include gelatin, hydrolyzed protein, collagen, and albumin. One polypeptide may be used alone or two or more polypeptides may be used in combination.

Preferred specific examples of the higher alcohol include dodecyl alcohol and cetyl alcohol. One higher alcohol may be used alone or two or more higher alcohols may be used in combination.

Preferred specific examples of the natural resin include gum arabic, shellac, wax, lignin, and polylactic acid. One natural resin may be used alone or two or more natural resins may be used in combination.

A preferred specific example of the lipid is lecithin. One lipid may be used alone or two or more lipids may be used in combination.

For the above preferred specific examples of the components in different categories, such as a polysaccharide and a polypeptide, two or more of these may be used in combination.

Specific examples of the edible organic substance include those mentioned as specific examples of the additives such as the aforementioned taste components and nutrients. These examples mentioned above are edible organic substances that are to function also as a component such as a taste component or a nutrient. The "edible organic substance" herein includes not only what are called foods and food additives but also pharmaceuticals and quasi-drugs, and means an orally ingestible organic substance.

The microparticulate may include cells such as human-derived cells, animal cells, plant cells, microbial cells, and spheroplasts, as well as organoids. Any of these cells serving as the microparticulate allow a pattern formed from the microparticulate to have a variety of physiological functions. Note that these cells contain an edible organic substance.

The individual particles of the microparticulate may aggregate in a noncovalent manner to generate mouthfeel or texture. This allows a pattern formed from the microparticulate to have a spatial design of mouthfeel or texture. The individual particles of the microparticulate may be aggregated in a noncovalent manner by any method. For example, the surfaces of the individual particles of the microparticulate may be charged with electricity for aggregation.

In the present invention, the pattern may be formed from a colorant. A pattern formed from a colorant enables a spatial color design by the pattern formed from the colorant. The pattern formed from a colorant is preferably made visible from the outside of the container containing the liquid matrix.

Colorant molecules commonly have a lower molecular weight than microparticulates. Thus, microparticulates tend to give more stable patterns. In an embodiment, the pattern is preferably formed from a microparticulate.

In the present invention, the pattern can be formed in the liquid matrix by the method to be described later.

The pattern-containing liquid of the present invention is contained in a container. The liquid matrix containing the pattern is contained in a container. The container may be selected as appropriate without limitation. For example, in the case where the pattern-containing liquid is a beverage, a container capable of containing a beverage may be used. In an embodiment, to make a pattern visible from the outside, the container is preferably a transparent container. Examples of a transparent container capable of containing a beverage include transparent glassware or cups made of transparent glass as well as transparent drink cups made of plastic.

The pattern-containing liquid of the present invention may be a beverage, a cosmetic, a pharmaceutical, a quasi-drug, a cell culture, a chemical reaction liquid, and the like. In an embodiment, the pattern-containing liquid is preferably used as a beverage. The pattern-containing liquid is preferably a beverage. In the case where the pattern-containing liquid is a beverage, the beverage contains a pattern formed from at least one of an edible microparticulate or an edible colorant in an edible liquid matrix. The pattern-containing liquid of the present invention is preferably a pattern-containing beverage.

In the pattern-containing liquid of the present invention, unless the effect of the present invention is impaired, at least one of a microparticulate or a colorant different from the at least one of the pattern-forming first microparticulate or first colorant may be dispersed in the liquid matrix. The different microparticulate and the different colorant dispersed in the liquid matrix are referred to as a second microparticulate and a second colorant, respectively. The liquid matrix may be free of the at least one of the second microparticulate or the second colorant. Examples of the second microparticulate and the second colorant include those mentioned for the first microparticulate and the first colorant. The pattern-containing liquid of the present invention may contain a dispersion medium, which is to be described later, to be used for producing the liquid. The pattern in the liquid matrix may be formed from a dispersion in which at least one of the first microparticulate or the first colorant is dispersed in a dispersion medium.

The pattern-containing liquid of the present invention can be produced, for example, by the following method:
A method for producing a pattern-containing liquid, the method including:

discharging a pattern-forming material containing at least one of a microparticulate or a colorant dispersed in a dispersion medium into a liquid matrix contained in a container using a nozzle to form a pattern of the at least one of the microparticulate or the colorant in the liquid matrix, the liquid matrix being a pseudoplastic fluid.
This method for producing a pattern-containing liquid is also encompassed by the present invention.

According to the method for producing a pattern-containing liquid of the present invention, a pattern-forming material containing at least one of a microparticulate or a colorant dispersed in a dispersion medium is discharged into a liquid matrix contained in a container using a nozzle, whereby a pattern of the at least one of the microparticulate or the colorant is formed. The at least one of the microparticulate or the colorant contained in the pattern-forming material is to form a pattern in the liquid matrix. The microparticulate and the colorant contained in the pattern-forming material are the same as the first microparticulate and the first colorant described for the pattern-containing liquid.

In the present invention, the liquid matrix to serve as a field for pattern formation is a pseudoplastic fluid. This enables stable formation of a pattern, such as a character or a picture, of the at least one of the microparticulate or the colorant in the liquid matrix. Using a pseudoplastic fluid as the liquid matrix enables formation of a pattern in a desired shape with reduced disruption of the pattern that has been already formed in comparison with the case of using a liquid without pseudoplasticity. Accordingly, the method can provide a pattern-containing liquid containing a pattern with a high degree of freedom in color, taste, flavor, mouthfeel, texture and so on. For example, introducing components such as a colorant, a taste substance, and a flavor component into the microparticulate enables spatial designing of color, taste, or flavor in the liquid matrix. Also, controlling the aggregation of the microparticulate enables spatial designing of mouthfeel or texture in the liquid matrix. Also, as described above, using a pseudoplastic fluid as the liquid matrix is less likely to cause a pattern formed in the liquid matrix to move and allows a pattern to have good stability even when the viscosity of the liquid matrix is low. A liquid matrix having a high viscosity enables more stable formation of a pattern in the liquid matrix and allows the resulting pattern to have better stability.

In the production method of the present invention, the liquid matrix and preferred embodiments thereof are the same as the liquid matrix and preferred embodiments thereof in the pattern-containing liquid of the present invention. The liquid matrix is preferably a fluid that satisfies the above formula (I) at least within a predetermined subrange of a shear-rate range from 0.3 to 130 s$^{-1}$. For example, the liquid matrix preferably has a viscosity of 4 mPa·s or higher at a shear rate of 100 s$^{-1}$ and at 25°C, with the viscosity being determined from a linear approximation formula of the logarithm of the shear rate and the logarithm of the viscosity. As described above, the liquid matrix can be prepared, for example, by mixing a liquid such as water with a thickening agent. The thickening agent is preferably a water-soluble thickening agent. Preferred embodiments of the water-soluble thickening agent and preferred parameters thereof such as the concentration in the liquid matrix are the same as those in the pattern-containing liquid of the present invention. In the production method of the present invention, the microparticulate and the colorant as well as preferred embodiments thereof are the same as those in the pattern-containing liquid of the present invention.

The pattern-forming material is a liquid material for forming a pattern in which at least one of a microparticulate or a colorant is dispersed in a dispersion medium. The pattern-forming material can also be regarded as a dispersion of at least one of a microparticulate or a colorant. The pattern-forming material can be prepared by dispersing at least one of a microparticulate or a colorant in a dispersion medium. The dispersion medium used is a liquid. The dispersion medium may be a pseudoplastic fluid or may be a liquid that exhibits no pseudoplasticity, and is preferably a pseudoplastic fluid. The dispersion medium to be used for a pattern-forming material may be a liquid to be used for preparing the above liquid matrix, such as water, a beverage, a cosmetic, a culture medium, or an aqueous solution. The dispersion medium may be the same liquid as the liquid to be used for the liquid matrix, or may be a liquid different therefrom. The dispersion medium may contain a surfactant, for example.

Being a pseudoplastic fluid, the dispersion medium is more easily prevented from diffusing in the liquid matrix. This allows a pattern formed from the at least one of the microparticulate or the colorant to maintain its shape in the liquid matrix for a long term. For example, mixing the dispersion medium with a thickening agent can provide pseudoplasticity. The thickening agent is preferably the aforementioned water-soluble thickening agent. The water-soluble thickening agent and preferred embodiments thereof are the same as the water-soluble thickening agent to be used for the aforementioned liquid matrix and preferred embodiments thereof. In an embodiment, the dispersion medium preferably contains the aforementioned water-soluble thickening agent. The water-soluble thickening agent is preferably at least one selected from the group consisting of xanthan gum, gellan gum, locust bean gum, tara gum, and carrageenan. The amount of the water-soluble thickening agent can be set as appropriate such that the dispersion medium has desired pseudoplasticity. In an embodiment where the dispersion medium contains at least one water-soluble thickening agent selected from the group consisting of xanthan gum, gellan gum, locust bean gum, tara gum, and carrageenan, the total concentration of the water-soluble thickening agent is preferably 0.01 to 0.5 wt%, more preferably 0.02 to 0.1 wt%. In an embodiment, the dispersion medium preferably contains xanthan gum. In the case where the dispersion medium contains xanthan gum, the amount of xanthan gum contained in the dispersion medium is preferably 0.01 to 0.5 wt%, more preferably 0.02 to 0.1 wt%.

The fact that the dispersion medium is a pseudoplastic fluid can be verified from at least two shear rates measured using a commercially available B-type viscometer well-known to those skilled in the art and the viscosities at the shear rates. Unless otherwise mentioned, the viscosity of the dispersion medium refers to the viscosity measured using a B-type viscometer (e.g., rotational viscometer ViscoQC 300-L, Anton Paar). The dispersion medium is preferably a liquid that exhibits pseudoplasticity at least at a temperature of 25°C. In an embodiment, the dispersion medium is preferably a fluid that exhibits pseudoplasticity at least within a predetermined subrange of a shear-rate range from 10 to 129 s$^{-1}$. In an embodiment, the dispersion medium is preferably a fluid that exhibits pseudoplasticity within a shear-rate range from 10 to 20 s$^{-1}$, more preferably a shear-rate range from 10 to 70 s$^{-1}$, still more preferably a shear-rate range from 10 to 129 s$^{-1}$.

In the case where the dispersion medium is a pseudoplastic fluid, this fluid is preferably a fluid that satisfies the above formula (I) ($\log(\eta 1/\eta 2)/\log(\gamma 1/\gamma 2) \leq -0.12$) at least within a predetermined subrange of a shear-rate range from 0.3 to 130 s$^{-1}$, more preferably satisfies the above formula (I) at least within a predetermined subrange of a shear-rate range from 1 to 130 s$^{-1}$ ($1 \leq \gamma 2 < \gamma 1 \leq 130$). This is because the resulting pattern has better stability.

In an embodiment, within a shear-rate range including 10 to 70 s$^{-1}$, the dispersion medium gives a value on the left-hand side ($\log(q1/\eta 2)/\log(\gamma 1/\gamma 2)$) of the formula (I) of preferably -2 or greater and -0.12 or smaller ($-2 \leq \log(\eta 1/\eta 2)/\log(\gamma 1/\gamma 2) \leq -0.12$), more preferably -1.5 or greater and -0.27 or smaller ($-1.5 \leq \log(\eta 1/\eta 2)/\log(\gamma 1/\gamma 2) \leq -0.27$), still more preferably -1 or greater and -0.3 or smaller ($-1 \leq \log(\eta 1/\eta 2)/\log(\gamma 1/\gamma 2) \leq -0.3$). In an embodiment, within a shear-rate range from 10 to 70 s$^{-1}$ ($\gamma 1 = 129$, $\gamma 2 = 10$) (preferably from 10 to 129 s$^{-1}$ ($\gamma 1 = 129$, $\gamma 2 = 10$)), the pseudoplastic fluid gives a value on the left-hand side of the formula (I) of preferably -2 or greater and -0.12 or smaller, more preferably -1.5 or greater and -0.27 or smaller, still more preferably -1 or greater and -0.3 or smaller.

In the case where the dispersion medium is a pseudoplastic fluid, the dispersion medium has a (calculated) viscosity at a shear rate of 100 s$^{-1}$ and at 25°C of preferably 3 to 40 mPa·s, more preferably 4 to 12 mPa·s, with the viscosity being determined from a linear approximation formula of the logarithm of the shear rate and the logarithm of the viscosity. This is because the dispersion medium having a viscosity at a shear rate of 100 s$^{-1}$ and at 25°C of 3 mPa·s or higher allows a pattern formed in the liquid matrix to be more stable. Also, this dispersion medium enables more stable formation of a pattern when formed in the liquid matrix using a pattern-forming material. A viscosity at a shear rate of 100 s$^{-1}$ and at 25°C of 40 mPa·s or lower is preferred because good discharge through a nozzle is achieved. The viscosity at a shear rate of 100 $s^{-1}$ and at 25°C determined from a linear approximation formula of the logarithm of the shear rate and the logarithm of the viscosity can be determined by the same method as that for the viscosity of the liquid matrix described above.

In the case where the dispersion medium is a pseudoplastic fluid, this fluid has a viscosity at a shear rate of 10 $s^{-1}$ and at 25°C of preferably 5 to 110 mPa·s, more preferably 7 to 30 mPa·s, still more preferably 9 to 26 mPa·s. The dispersion medium having a viscosity at a shear rate of 10 $s^{-1}$ and at 25°C within the above range allows a pattern in the liquid matrix to have better stability.

The dispersion medium has a viscosity determined using a tuning fork vibro viscometer (e.g., SV-10, A & D Co., Ltd.) of preferably 0.8 mPa·s or higher and 6 Pa·s or lower at 25°C. The dispersion medium having a viscosity determined using a tuning fork vibro viscometer at 25°C of 0.8 mPa·s or higher and 6 Pa·s or lower is more easily prevented from diffusing in the liquid matrix. This allows a pattern formed from at least one of the microparticulate or the colorant to maintain its shape in the liquid matrix for a long term. From this viewpoint, the viscosity of the dispersion medium is more preferably 3 Pa·s or lower, still more preferably 1 Pa·s or lower at 25°C. In an embodiment, the viscosity of the dispersion medium determined using a tuning fork vibro viscometer at 25°C is more preferably 0.8 mPa·s or higher and 3 Pa·s or lower, still more preferably 0.8 mPa·s or higher and 1 Pa·s or lower. Also, in an embodiment, this viscosity of the dispersion medium at 25°C is preferably 1 mPa·s or higher and 100 mPa·s or lower, more preferably 1 mPa·s or higher and 50 mPa·s or lower. In an embodiment where the dispersion medium is a liquid that exhibits no pseudoplasticity, the viscosity (25°C) determined using a tuning fork vibro viscometer preferably falls within the above range.

In an embodiment, the ratio of the density of the microparticulate to the density of the dispersion medium to be used for the pattern-forming material (density of microparticulate/density of dispersion medium) is preferably 0.9 or higher and 1.1 or lower.

The ratio of the density of the dispersion medium to the density of the liquid matrix (density of dispersion medium/density of liquid matrix) is preferably 0.9 or higher and 1.1 or lower.

In the case where the ratio of the density of the microparticulate to the density of the dispersion medium and the ratio of the density of the dispersion medium to the density of the liquid matrix are each 0.9 or higher and 1.1 or lower, a pattern formed from at least one of the microparticulate or the colorant can be more prevented from floating or sinking together with the dispersion medium in the liquid matrix. From this viewpoint, these density ratios are each more preferably 0.92 or higher and 1.08 or lower, still more preferably 0.95 or higher and 1.05 or lower.

In an embodiment, the ratio of the density of the pattern-forming material to the density of the liquid matrix (density of pattern-forming material/density of liquid matrix) is preferably 0.9 or higher and 1.1 or lower, more preferably 0.92 or higher and 1.08 or lower, still more preferably 0.95 or higher and 1.05 or lower. A ratio of the density of the pattern-forming material to the density of the liquid matrix within the above range enables more stable formation of a pattern.

At least one of the microparticulate or the colorant before discharged into the liquid matrix are dispersed in the dispersion medium. This pattern-forming material containing at least one of the microparticulate or the colorant dispersed in the dispersion medium is discharged into the liquid matrix using a nozzle. As described, the dispersion medium forms a liquid substance containing at least one of the microparticulate or the colorant so as to allow the at least one of the microparticulate or the colorant to be discharged into the liquid matrix using a nozzle. In the case where the microparticulate contains a colorant component (exhibits a color) or the pattern-forming material contains a colorant, the pattern-forming material can function as a pattern-forming ink. At least one of the microparticulate or the colorant can be dispersed in the dispersion medium by any method, e.g., any known method such as stirring.

In the case where the pattern-forming material contains a microparticulate, the volume percent concentration of the microparticulate in the material may be, but is not limited to, preferably 0.05% by volume or more and 50% by volume or less, more preferably 0.1% by volume or more and 40% by volume or less, still more preferably 0.5% by volume or more and 30% by volume or less.

In the case where the pattern-forming material contains a colorant, the volume percent concentration of the colorant in the material may be, but is not limited to, preferably 0.01% by volume or more and 30% by volume or less, more preferably 0.05% by volume or more and 20% by volume or less, still more preferably 0.1% by volume or more and 10% by volume or less.

The "volume percent concentration of the microparticulate in the pattern-forming material" herein can be determined by the coulter counter method.

The pattern-forming material is not limited; one pattern-forming material alone may be discharged into the liquid matrix, or two or more pattern-forming materials which are different in at least one of the type of the microparticulate, the type of the colorant, or the type of the dispersion medium may be discharged into the liquid matrix simultaneously or successively.

To maintain a pattern of at least one of the microparticulate or the colorant in the liquid matrix for a long term, the dispersion medium is preferably one compatible with the liquid matrix, and may be the same liquid as the liquid matrix or a liquid similar to the liquid matrix. This is described in detail below.

The dispersion medium and the liquid matrix preferably have an absolute difference in moisture content of 0% or greater and 50% or smaller. Combination of liquids with no difference in moisture content can change the taste or color without changing the mouthfeel or texture. Combination of liquids with a difference in moisture content can change the mouthfeel or texture. This absolute difference therebetween is more preferably 25% or smaller, still more preferably 15% or smaller. In common cases, the moisture content of the dispersion medium is smaller than the moisture content of the liquid matrix.

The "moisture content of a liquid" herein can be determined by the loss on drying test. Specifically, a sample containing moisture (liquid herein) is weighed and placed in a temperature-constant chamber at a predetermined temperature so that the moisture is evaporated. The weight change of the sample is then calculated, whereby the moisture content can be determined.

In the present invention, the liquid matrix into which the pattern-forming material is to be discharged may also contain at least one of the microparticulate or the colorant (at least one of the second microparticulate or the second colorant) dispersed therein. The liquid matrix may be free of at least one of the second microparticulate or the second colorant.

In the case where the liquid matrix contains the second microparticulate, the volume percent concentration of the microparticulate in the liquid matrix may be more than 0% by volume and 74% by volume or less, preferably 0.1% by volume or more and 70% by volume or less, more preferably 1% by volume or more and 60% by volume or less, still more preferably 5% by volume or more and 50% by volume or less. Since the concentration of the second microparticulate in the liquid matrix has no influence on the formation of a pattern in the liquid, this concentration can be set to any value. When the same particles are placed in a liquid in the densest arrangement, this arrangement constitutes the hexagonal close-packed structure and the atomic packing factor of this structure is calculated to be about 74% by volume. Thus, the highest volume percent concentration of the second microparticulate in the liquid matrix is 74% by volume.

The pattern-forming material is discharged into the liquid matrix contained in a container using a nozzle, whereby a pattern of at least one of the microparticulate or the colorant (at least one of the first microparticulate or the first colorant) is formed in the liquid matrix. Formation of a pattern is commonly performed at a temperature at which the liquid matrix exhibits pseudoplasticity. The nozzle is preferably a position-controllable nozzle. The position-controllable nozzle is preferably a nozzle that is controllable with a controller to be described later in terms of the three-dimensional position thereof and/or the discharge flow rate of the pattern-forming material to be discharged.

The nozzle is a hollow pipe having an opening at each end. The pattern-forming material is introduced through the base end of the nozzle, passed through the hollow inside the nozzle, and then discharged through the tip end of the nozzle. Preferably, the three-dimensional position of the nozzle and the discharge flow rate of the pattern-forming material discharged through the tip end of the nozzle are controlled by a controller of a device for producing a pattern-containing liquid to be described later. Any number of nozzles, such as one nozzle or multiple nozzles, may be used.

The nozzle is preferably flexibly movable along multiple axes (e.g., three or more axes and eight or less axes). This enables easy formation of a 3D pattern as a pattern formed from the pattern-forming material. Not only the nozzle but also a container of a liquid may be moved.

The tip end of the nozzle may have any opening shape, and is preferably a circular, elliptic, triangular, rectangular, square, rhombic, V-shaped, U-shaped, or C-shaped tip end.

The nozzle diameter is not limited and is preferably 0.1 mm or greater and 5.0 mm or smaller, more preferably 0.2 mm or greater and 3.0 mm or smaller, still more preferably 0.2 mm or greater and 1.0 mm or smaller.

The "nozzle diameter" herein means the length measured at the longest portion of the opening at the tip end of the nozzle. For example, in the case of a nozzle having a circular opening at the tip end, the term indicates the diameter. In the case of an elliptic opening, the term means the length of the major axis. In the case of a quadrangular opening, the term means the length of the longer diagonal. In the case of a nozzle having a recessed opening at the tip end, such as a V-shaped, U-shaped, or C-shaped opening, the term means the diameter of the smallest circle that encloses the shape.

The discharge flow rate (discharge rate) of the pattern-forming material discharged through the nozzle is preferably 0.1 $\mu$L/s or higher and 200 mL/s or lower, more preferably 0.2 $\mu$L/s or higher and 50 mL/s or lower, still more preferably 0.3 $\mu$L/s or higher and 20 mL/s or lower, further preferably 0.3 $\mu$L/s or higher and 10 mL/s or lower, particularly preferably 0.4 $\mu$L/s or higher and 5 $\mu$L/s or lower, most preferably 0.5 $\mu$L/s or higher and 3 $\mu$L/s or lower. The discharge flow rate (discharge rate) of the pattern-forming material discharged through the nozzle is also referred to simply as "the discharge flow rate of the nozzle" hereinbelow.

The nozzle speed during drawing is preferably 0.1 mm/s or higher and 250 mm/s or lower, more preferably 0.1 mm/s or higher and 150 mm/s or lower, still more preferably 0.5 mm/s or higher and 130 mm/s or lower, particularly preferably 1 mm/s or higher and 100 mm/s or lower, most preferably 5 mm/s or higher and 60 mm/s or lower.

The nozzle speed between one representation (line) to another representation (line) is preferably 0.1 mm/s or higher and 250 mm/s or lower, more preferably 0.1 mm/s or higher and 150 mm/s or lower, still more preferably 0.5 mm/s or higher and 130 mm/s or lower, particularly preferably 1 mm/s or higher and 100 mm/s or lower, most preferably 5 mm/s or higher and 100 mm/s or lower.

The acceleration of the nozzle during drawing is preferably 0.000001 mm/s$^2$ or higher and 250 mm/s$^2$ or lower,

more preferably 0.000001 mm/s$^2$ or higher and 150 mm/s$^2$ or lower, still more preferably 0.1 mm/s$^2$ or higher and 130 mm/s$^2$ or lower, particularly preferably 1 mm/s$^2$ or higher and 100 mm/s$^2$ or lower, most preferably 1 mm/s$^2$ or higher and 20 mm/s$^2$ or lower.

The acceleration of the nozzle between one representation (line) to another representation (line) is preferably 0.000001 mm/s$^2$ or higher and 250 mm/s$^2$ or lower, more preferably 0.000001 mm/s$^2$ or higher and 150 mm/s$^2$ or lower, still more preferably 0.1 mm/s$^2$ or higher and 130 mm/s$^2$ or lower, particularly preferably 1 mm/s$^2$ or higher and 100 mm/s$^2$ or lower, most preferably 1 mm/s$^2$ or higher and 50 mm/s$^2$ or lower.

The pattern to be formed with the pattern-forming material may be any of a 1D pattern (line), a 2D pattern (plane), and a 3D pattern (solid). Examples of the type of the pattern include, but are not limited to: visible patterns such as lines, pictures, and symbols including characters; patterns generating taste, aroma, mouthfeel, texture and so on; and patterns generating these in combination.

The pattern in the liquid matrix may be in contact with the inside of the container that contains the liquid matrix, or may not be in contact with the inside of the container. The pattern may float in the liquid matrix.

Each representation to be drawn with the pattern-forming material may include a linear portion and/or a curved portion; Specific examples include symbols, including characters, and pictures. Each line drawn with the pattern-forming material may be a linear line or may be a curved line, and may include one or more linear portions and/or one or more curved portions.

The liquid matrix in which a pattern is to be formed is contained in a container. The container may be any one and is selected as appropriate in accordance with the liquid matrix. For example, in the case where the pattern-containing liquid to be obtained is a beverage, a container capable of containing a beverage may be used. In an embodiment, to make a pattern visible from the outside, the container is preferably a transparent container. Examples of a transparent container capable of containing a beverage include transparent glassware or cups made of transparent glass as well as transparent drink cups made of plastic.

Preferably, the liquid matrix is contained in a container (e.g., a glass or a cup) and the nozzle has a length that is at least greater than the depth of the liquid matrix contained in the container. This enables formation of a pattern of the pattern-forming material at any position in the liquid using the nozzle.

In an embodiment, the pattern-forming material draws a representation or a line while it is not fixed or solidified in the liquid matrix, thereby forming a pattern. In an embodiment, a pattern formed with the pattern-forming material preferably remains unfixed or unsolidified in the liquid matrix and is more preferably present in a floating state in the liquid matrix.

The pattern-forming material may be any liquid-state fluid, and can be selected as appropriate in accordance with what is produced as a pattern-containing liquid. The pattern-forming material is preferably a pseudoplastic fluid. The liquid matrix may be any pseudoplastic fluid and can be selected as appropriate in accordance with the use of the pattern-containing liquid to be produced.

The following describes a pattern-forming material and a liquid matrix that are suitable for producing, as a pattern-containing liquid, a beverage or cosmetic in which a pattern is formed or a liquid containing a pattern of cells based on a pattern-forming method suitable for these cases.

The following features can be applied to the uses other than the above as appropriate.

In an embodiment, the pattern-forming material used is a pattern-forming material in which a microparticulate containing an organic substance (preferably an edible organic substance) is dispersed in a dispersion medium (hereinafter, referred to as microparticulate-dispersed material), and is discharged into a liquid matrix using a position-controllable nozzle, whereby a pattern (representation or line) of the microparticulate is formed.

A pattern in the liquid matrix can be formed, for example, using a microparticulate-dispersed material as the pattern-forming material and using a device for producing a pattern-containing liquid to be described below. The following describes a device for producing a pattern-containing liquid that can be used in the present invention (hereinafter, also simply referred to as a production device).

The production device is a device for producing a pattern-containing liquid in which a pattern is formed in a liquid matrix. The production device preferably includes: a tank configured to contain a pattern-forming material containing at least one of a microparticulate or a colorant dispersed in a dispersion medium; a nozzle configured to discharge the pattern-forming material; a pump configured to deliver the pattern-forming material to the nozzle; and a controller configured to control the position of the nozzle and the discharge flow rate of the pattern-forming material to be discharged through the nozzle. This production device may be configured such that the pump feeds the pattern-forming material from the tank to the nozzle and the nozzle discharges the pattern-forming material to a predetermined position in the target liquid (liquid matrix) while the controller controls the position of the nozzle and the discharge flow rate of the pattern-forming material. The discharge flow rate of the pattern-forming material can be controlled by changing the pump pressure or the pressure inside the nozzle in response to voltage application to, for example, a piezoelectric element disposed at a nozzle portion. Accordingly, a pattern can be automatically formed in a liquid by designing a pattern using software such as CAD and controlling the nozzle based on this design. Thus, the above production device can be used to automatically produce a pattern-containing liquid. In other words, the production device can produce a pattern-containing liquid having a high degree of freedom in design of a pattern, in a liquid, that can provide color, taste, aroma, or tactile sensations such as mouthfeel and texture.

The pattern-forming material contained in the tank may be delivered to the nozzle through a liquid delivery tube. The tank may be any container that can contain the pattern-forming material. The tank may be separated from the pump and nozzle or may be integrated with the pump and nozzle. Multiple tanks may be provided in accordance with the types of the pattern-forming materials.

The nozzle is as described above. The nozzle may be coupled with a piezoelectric element, for example. Applying voltage to this piezoelectric element can change the pressure inside the nozzle, thereby controlling the discharge flow rate of the pattern-forming material from the nozzle.

The pump may be any pump that can deliver the pattern-forming material to the nozzle, such as a syringe pump or a peristaltic pump.

The controller may be provided with a multi-axial mechanism (e.g., a mechanism having three or more and eight or less axes) coupled with the nozzle and configured to move the position of the nozzle. This controller can control the nozzle along multiple axes and move the nozzle three-dimensionally, i.e., form a 3D pattern easily. Examples of the multi-axial mechanism to be used include a gantry system (e.g., three axes) and a robot arm (e.g., eight axes).

To control the discharge flow rate of the pattern-forming material, the controller may control the pump pressure or may control the voltage applied to the piezoelectric element provided at the nozzle portion.

The controller may be further provided with a control processor that executes control-processing of components such as the nozzle, the pump, and the multi-axial mechanism. The control processor may include, for example, a software program to execute a variety of processing operations such as control-processing, a central processing unit (CPU) to execute the software program, and a variety of hardware devices (e.g., memory) controlled by the CPU. The software program (e.g., control program using 3D-CAD data) and data for operating the control processor are stored in the memory. The control processor may be provided together with the multi-axial mechanism at a place where a pattern-containing liquid is to be produced (e.g., in the same store). Alternatively, an element related to at least one function of the control processor may be separately provided at a place different from the production site for a pattern-containing liquid (e.g., in the cloud).

The production device may further include a stage that can bear a container containing a liquid matrix, and the stage may be movably arranged. The controller may allow the nozzle to discharge the pattern-forming material into the liquid matrix while moving not only the nozzle but also the stage, i.e., the liquid matrix contained in the container.

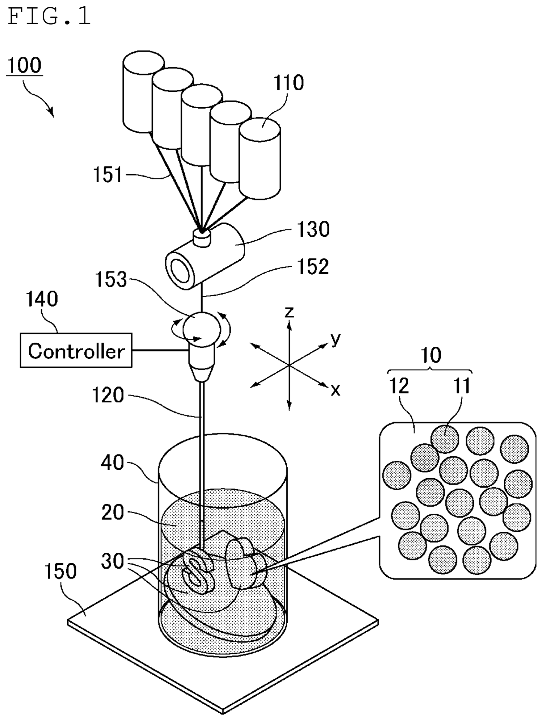

FIG. 1 is a conceptual diagram of an example of a device for producing a pattern-containing liquid in which a pattern is formed in a liquid matrix. A device 100 for producing a pattern-containing liquid shown in FIG. 1 includes: multiple tanks 110 each containing a pattern-forming material 10 (e.g., a microparticulate-dispersed material containing a microparticulate 11 dispersed in a dispersion medium 12); a nozzle 120 configured to discharge the pattern-forming material 10; a pump 130 configured to deliver the pattern-forming material 10 to the nozzle 120; a controller 140 provided with an angle-control mechanism 153 configured to change the angle (orientation) of the nozzle 120; a stage 150 configured to bear a container 40 containing a liquid matrix 20; liquid delivery tubes 151 that connect the tanks 110 and the pump 130; and a liquid delivery tube 152 that connects the pump 130 and the nozzle 120. The controller 140 is configured to control the position and angle of the nozzle 120 and the discharge flow rate of the pattern-forming material 10 to be discharged through the nozzle 120. The angle-control mechanism 153 includes a ball-shaped member that is rotatable in at least the up-down and left-right directions and can flexibly change the tilt of the nozzle 120 under the control of the controller 140. The production device 100 can automatically form a pattern 30 of the pattern-forming material 10 (e.g., the microparticulate 11) in the liquid matrix 20. The tanks 110 may contain multiple, different types of pattern-forming materials 10, and such multiple types of pattern-forming materials 10 may be discharged through the nozzle 120 simultaneously or successively. The production device 100 may include multiple nozzles 120, and the multiple nozzles 120 may discharge multiple types of pattern-forming materials 10 simultaneously or successively.

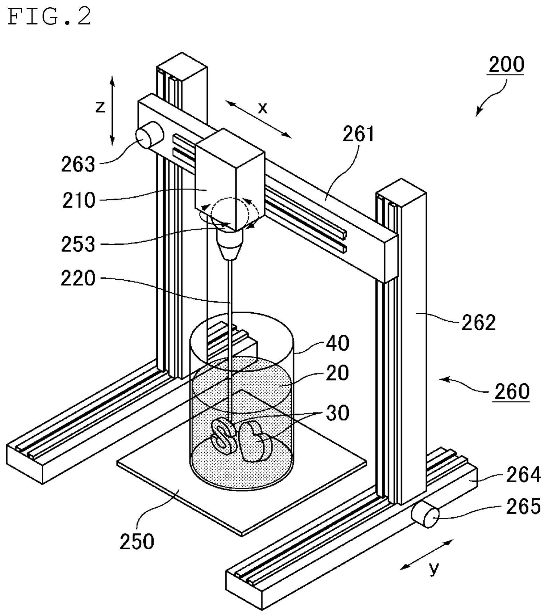

FIG. 2 is a conceptual diagram of an example of a device for producing a pattern-containing liquid in which a gantry system is used. A device 200 for producing a pattern-containing liquid shown in FIG. 2 includes: a tank 210 containing a pattern-forming material (not shown; e.g., a microparticulate-dispersed material containing a microparticulate dispersed in a dispersion medium); a nozzle 220 configured to discharge the pattern-forming material; a stage 250 configured to bear a container 40 containing a liquid matrix 20; a gantry system 260 serving as a multi-axial mechanism of a controller (not shown); and an angle-control mechanism 253 of the controller, the mechanism being configured to change the angle (orientation) of the nozzle 220. The angle-control mechanism 253 includes a ball-shaped member that is rotatable in at least the up-down and left-right directions and can flexibly change the tilt of the nozzle 220 under the control of the controller. The tank 210 is integrated with a pump (not shown) configured to deliver the pattern-forming material to the nozzle 220 and an x-axial drive motor (not shown) of the gantry system 260. The gantry system 260 is a triaxial drive mechanism, and includes an x-axial rail 261 that supports the tank 210 movably along the x axis, z-axial rails 262 that support the x-axial rail 261 movably along the z axis, a z-axial drive motor 263 configured to drive the x-axial rail 261 supported by the z-axial rails 262 along the z axis, y-axial rails 264 that support the respective z-axial rails 262 movably along the y axis, and a y-axial drive motor 265 configured to drive the z-axial rails 262 supported by the respective y-axial rails 264 along the y axis. Under the control of the controller, the system can flexibly move the nozzle 220 along the three axes. The controller is configured to control the position of the nozzle 220 by use of the gantry system 260, control the angle of the nozzle 220 with the angle-control mechanism 253, and control the discharge flow rate of the pattern-forming material to be discharged through the nozzle 220. The production device 200 can also automatically form a pattern 30 of the pattern-forming material (e.g., the microparticulate) in the liquid matrix 20.

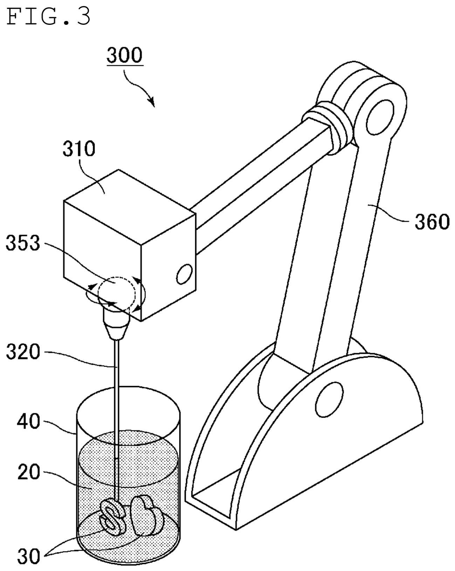

FIG. 3 is a conceptual diagram of an example of a device for producing a pattern-containing liquid in which a robot arm is used. A device 300 for producing a pattern-containing liquid shown in FIG. 3 includes: a tank 310 containing a pattern-forming material (not shown; e.g., a microparticulate-dispersed material containing a microparticulate dispersed in a dispersion medium); a nozzle 320 configured to discharge the pattern-forming material; a robot arm 360 serving as a multi-axial mechanism of a controller (not shown); and an angle-control mechanism 353 of the controller, the mechanism being configured to change the angle (orientation) of the nozzle 320. The angle-control mechanism 353 includes a ball-shaped member that is rotatable in at least the up-down and left-right directions and can flexibly change the tilt of the nozzle 320 under the control of the controller. The tank 310 is integrated with a pump (not shown) configured to deliver the pattern-forming material to the nozzle 320. The robot arm 360 is, for example, an eight-axial drive mechanism and can flexibly move the nozzle 320 along the eight axes under the control of the controller. The controller is configured to control the position of the nozzle 320 by use of the robot arm 360, control the angle of the nozzle 320 with the angle-control mechanism 353, and control the discharge flow rate of the pattern-forming material to be discharged through the nozzle 320. The production device 300 can also automatically form a pattern 30 of the pattern-forming material (e.g., the microparticulate) in the liquid matrix 20.

Although the methods for forming a pattern in a liquid matrix using a production device are described as examples hereinabove, the method for forming a pattern of at least one of the microparticulate or the colorant (at least one of the first microparticulate or the first colorant) in the liquid matrix is not limited thereto.

The method of the present invention can provide a pattern-containing liquid in which a pattern of at least one of a microparticulate or a colorant is formed in a liquid matrix. In a preferred embodiment, a drink is used as a liquid matrix and an edible pattern-forming material is used, whereby a pattern-containing beverage can be obtained.

As described, using a pseudoplastic fluid as a matrix of a pattern-containing liquid enables stable formation of a pattern from at least one of a microparticulate or a colorant in the matrix, as well as formation of a pattern-containing liquid in which the pattern has good stability. The present invention also encompasses use of a pseudoplastic fluid as a matrix of a pattern-containing liquid. The pseudoplastic fluid and preferred embodiments thereof are the same as the liquid matrix and preferred embodiments thereof in the aforementioned pattern-containing liquid of the present invention.

The numerical ranges represented by the lower limit and the upper limit, i.e., "lower limit to upper limit", herein include the lower limit and the upper limit. For example, the range represented by "1 to 2" means 1 or greater and 2 or smaller, including 1 and 2. The upper limits and the lower limits herein may be used in any combination to form a range.

The academic literature and patent literature mentioned herein are incorporated herein by reference.

The Description also discloses the following pattern-containing liquid and method for producing the same.

<1> A pattern-containing liquid containing a pattern formed from at least one of a microparticulate or a colorant in a liquid matrix,

the liquid matrix being a liquid containing at least one water-soluble thickening agent selected from the group consisting of xanthan gum, gellan gum, locust bean gum, tara gum, and carrageenan,
the liquid matrix being contained in a container.

<2> The pattern-containing liquid according to the clause <1>,
wherein the water-soluble thickening agent in the liquid matrix has a total concentration of 0.01 to 2 wt%, preferably 0.02 to 1 wt%.
<3> The pattern-containing liquid according to the clause <1> or <2>,
wherein the pattern-containing liquid is a beverage.
<4> A method for producing a pattern-containing liquid, the method including:

discharging a pattern-forming material containing at least one of a microparticulate or a colorant dispersed in a dispersion medium into a liquid matrix contained in a container using a nozzle to form a pattern of the at least one of the microparticulate or the colorant in the liquid matrix,
the liquid matrix being a liquid containing at least one water-soluble thickening agent selected from the group consisting of xanthan gum, gellan gum, locust bean gum, tara gum, and carrageenan.

<5> The production method according to the clause <4>,
wherein the water-soluble thickening agent in the liquid matrix has a total concentration of 0.01 to 2 wt%, preferably 0.02 to 1 wt%.

In the pattern-containing liquid and method for producing a pattern-containing liquid of the present disclosure, preferred embodiments of the liquid matrix and the water-soluble thickening agent are the same as preferred embodiments thereof in the aforementioned pattern-containing liquid and method for producing a pattern-containing liquid of the present invention. For example, the liquid matrix is preferably a liquid containing water, more preferably a water-based liquid. The microparticulate and the colorant as well as preferred embodiments thereof are the same as those in the aforementioned pattern-containing liquid and method for producing a pattern-containing liquid of the present invention. In the present disclosure, the dispersion medium, the pattern-forming material, the method for forming a pattern, and preferred embodiments thereof, for example, are the same as those in the aforementioned method for producing a pattern-containing liquid of the present invention. For example, the dispersion medium preferably contains the water-soluble thickening agent.

EXAMPLES

The present invention is described in more detail below with reference to examples. The present invention is not limited to these examples.

In the examples, the density of liquids was measured using a density meter DMA 4500 M (Anton Paar GmbH).

Unless otherwise mentioned, the operations in the examples were performed at 25°C.

<Reference Example 1>

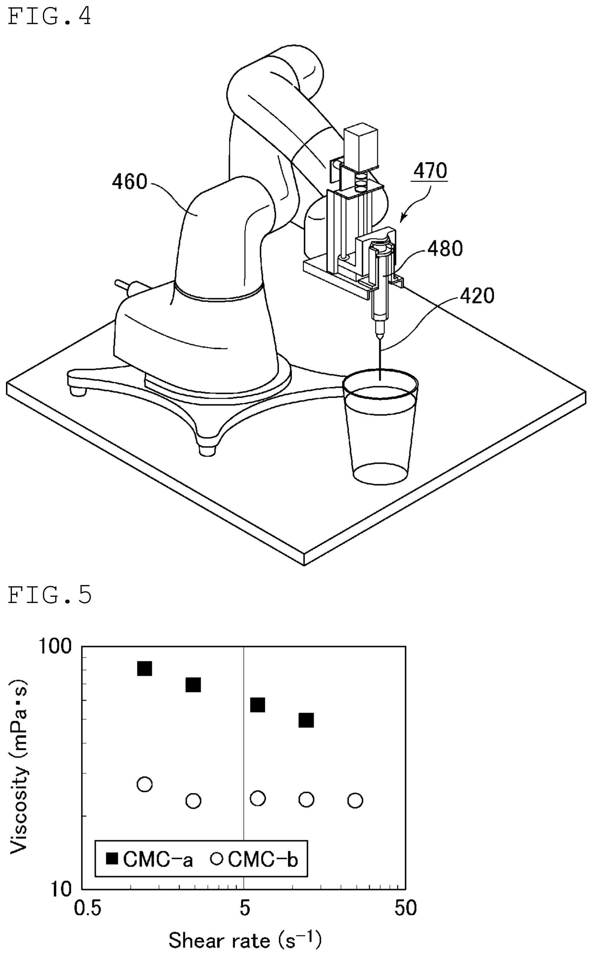

To produce a pattern-containing liquid, the following device prototype was formed. FIG. 4 is a schematic perspective view of a device prototype in Reference Example 1 for producing a pattern-containing liquid.

As shown in FIG. 4, a human collaborative robot 460 (human collaborative robot COBOTTA, Denso Wave Inc.) was equipped at its arm end with a syringe push system 470 including a stepping motor and a lead screw. This syringe push system 470 was designed to be pushed at various rates according to the external input. The syringe push system 470 is compatible with syringes of various sizes; the device used in the following examples was provided with, as a syringe 480, a plunger 1010TLL (capacity: 10 mL, Hamilton, USA) equipped with N727 pst-3 (inner diameter: 0.21 mm) as a nozzle 420. The maximum discharge flow rate (maximum discharge rate) was from 0 mL/s to 200 mL/s. The maximum nozzle speed was 150 mm/s and the minimum nozzle speed was 0.15 mm/s. With the nozzle speed being defined as $\alpha$ mm/s, the nozzle acceleration was at most $\alpha$ mm/s$^2$ and at least 0.000001 mm/s$^2$.

The device produced in Reference Example 1 can discharge a liquid pattern-forming material such as ink through the nozzle 420.

<Preparation Example 1>

A carboxymethyl cellulose (CMC) dispersion having pseudoplasticity was prepared. Carboxymethyl cellulose (SUNROSE® SLD-F1, Nippon Paper Industries Co., Ltd.), which has a degree of substitution as low as 0.20 (mol/C6) to 0.30 (mol/C6) and thus has low solubility in water, was suspended in 1000 g of water to a final concentration (amount) of 2 wt%. The resulting dispersion was cloudy. This suspension was subjected to rapid oblique collision using an ultra-high pressure wet pulverization and dispersion device STAR BURST system (HJP-25001, Sugino Machine Ltd.), thereby mechanically achieving a uniformly dispersed state. The carboxymethyl cellulose (SLD-F1) dispersion treated with the STAR BURST system three times was observed to be clear with a uniformly dispersed state.

<Example 1>

The device described in Reference Example 1 was used to produce a liquid containing a pattern that is meaningful when observed from a side of the container. In this process, the pattern stability was examined in relation to the difference in thickening agents.

A liquid to serve as a drawing target (liquid matrix) was prepared, which was referred to as CMC-a. CMC-a was prepared using the dispersion of carboxymethyl cellulose (SUNROSE® SLD-F1, Nippon Paper Industries Co., Ltd.) prepared in Preparation Example 1. The carboxymethyl cellulose dispersion prepared in Preparation Example 1 was suspended in an aqueous glycerol solution such that the final concentration of carboxymethyl cellulose was 0.5 wt%. The resulting suspension of carboxymethyl cellulose was CMC-a. The final concentration of glycerol in this liquid to serve as a drawing target, CMC-a, was 20 wt%. CMC-a had a density (25°C) of 1.05 g/mL.

In addition to CMC-a, another liquid to serve as a drawing target, CMC-b, was prepared. CMC-b was prepared by suspending carboxymethyl cellulose (SUNROSE® FJ08HC, Nippon Paper Industries Co., Ltd.) in an aqueous sugar solution to a final concentration of 0.5 wt%. The resulting suspension of carboxymethyl cellulose was referred to as CMC-b. The final concentration of sugar in this liquid to serve as a drawing target, CMC-b, was 13 wt%. CMC-b had a density (25°C) of 1.05 g/mL.

The relationship between the viscosity $\eta$ at 25°C of each of CMC-a and CMC-b and the shear rate $\gamma$ was analyzed using a B-type viscometer LVDV2T (Brookfield) in combination with a UL low viscosity adapter set. Each analysis was performed at a spindle rotational speed of 1, 2, 5, 10, or 20 rpm for one minute.

FIG. 5 is a graph of the relationship between the viscosity of each of CMC-a and CMC-b and the shear rate (square: CMC-a, circle (○): CMC-b). The graph shown in FIG. 5 is a log-log graph in which the shear rate and the viscosity are indicated with log scales. In the graphs of FIG. 5 as well as FIGS. 7 to 12, FIG. 17, and FIG. 24 to be described later, the vertical axis indicates the logarithm of the viscosity (mPa·s), while the horizontal axis indicates the logarithm of the shear rate (s$^{-1}$).

FIG. 5 demonstrates that CMC-a exhibited a shear-rate-dependent reduction in the viscosity, i.e., pseudoplasticity. In contrast, the figure demonstrates that CMC-b exhibited a constant viscosity regardless of the shear rate, i.e., Newtonian behavior. The slope of each log-log graph in FIG. 5 was determined by the following formula (I).

$$\mathtt{Slope\ =\ log(\eta1/\eta2)/log(\gamma1/\gamma2)\quad Formula\ (I)}$$

In the formula (I), the right-hand side can also be expressed by $(\log_{10}\eta_1 - \log_{10}\eta_2)/(\log_{10}\gamma_1 - \log_{10}\gamma_2)$.

In the formula (I), $\eta1$ represents the viscosity (mPa·s) of the fluid at a shear rate $\gamma1$ (s$^{-1}$); $\eta2$ represents the viscosity (mPa·s) of the fluid at a shear rate $\gamma2$ (s$^{-1}$); and $\gamma2 < \gamma1$. The viscosity corresponds to the viscosity at 25°C. The formula (I) provides the slope of a straight line between the two points ($\log\gamma_1$, $\log\eta_1$) and ($\log\gamma_2$, $\log\eta_2$).

The slope determined by the above formula was -0.228 for CMC-a and -0.064 for CMC-b. This slope of CMC-a corresponds to the slope within a shear-rate range from 1 to 12 s$^{-1}$ ($\gamma1 = 12$ (s$^{-1}$), $\gamma2 = 1$ (s$^{-1}$)) in the graph shown in FIG. 5. The above slope of CMC-b corresponds to the slope within a shear-rate range from 1 to 24 s$^{-1}$ ($\gamma1 = 24$ (s$^{-1}$), $\gamma2 = 1$ (s$^{-1}$)) in the graph shown in FIG. 5. The viscosity at a shear rate of 100 s$^{-1}$ and at 25°C determined from a linear approximation formula of the logarithm of the shear rate and the logarithm of the viscosity was 30 mPa·s for CMC-a and 20 mPa·s for CMC-b.

Then, a pattern was drawn in each of these liquids to serve as drawing targets. For the purpose of pattern drawing, ink was prepared in which a microparticulate was dispersed in a liquid. The ink was prepared by suspending an aqueous suspension of a 1-um-diameter red polystyrene microparticulate (Polystyrene Red Dyed Microsphere 1.00 μm, density 1.05 g/mL, Polysciences Inc.) in an aqueous glycerol solution such that the microparticulate was at a final concentration of 1 wt% and the glycerol was at a final concentration of 20 wt%. This ink had a viscosity (25°C) of 2 mP·s and a density of 1.05 g/mL. The viscosity (25°C) of the ink was measured using a tuning fork vibro viscometer SV-10 (A&D Co., Ltd.). The density of the ink was measured using a density meter DMA 4500 M (Anton Paar GmbH).

CMC-a and CMC-b were put into respective transparent containers and, using the device produced in Reference Example 1, a word (Love) and a heart-shaped pattern were drawn in each liquid. The ink was fed into the syringe 480 of the device and discharged through the nozzle 420 for drawing. Specifically, the word "Love" was first drawn and the heart-shaped pattern surrounding the word was then drawn. In each of these drawings, the nozzle speed during drawing was 50 mm/s, the nozzle acceleration during drawing was 2 mm/s$^2$, the nozzle speed to a next line was 90 mm/s, and the nozzle acceleration to a next line was 18 mm/s$^2$. The discharge flow rate of the ink was 1.7 μL/s.

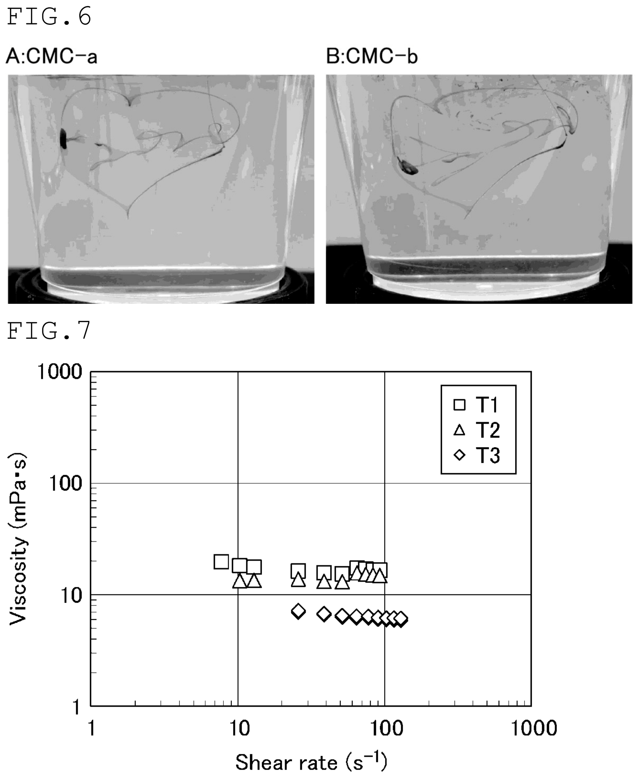

FIG. 6A and FIG. 6B are photographs of the patterns drawn in the liquids in Example 1, each of which is taken from a side of the container (with the drawing surface observed from the front). FIG. 6A is a photograph of the pattern drawn in CMC-a, while FIG. 6B is a photograph of the pattern drawn in CMC-b. In comparison with CMC-b, CMC-a enabled more stable formation of the pattern in the liquid. Specifically, CMC-a led to more stable formation of the word and heart shape of the microparticulate in the liquid, with a line that had been drawn being less influenced by the nozzle movement to draw a next line during the drawing. CMC-a reduced deformation of the pattern that had been formed during the drawing and enabled formation of a more clear heart shape. CMC-a also reduced a change of the pattern formed. These results demonstrate that a more stable pattern can be formed in a liquid that exhibits pseudoplasticity than in a liquid that exhibits no pseudoplasticity.

<Example 2>

In producing a pattern-containing liquid of which the pattern is meaningful when observed from a side of the container using the above device, the viscous features of liquids that stabilize the pattern were examined.

Samples T1 to T14 were prepared as liquids to serve as drawing targets (liquid matrices). The samples were prepared using thickening agents commonly used for foods, i.e., acacia gum, carboxymethyl cellulose, xanthan gum, and gellan gum. These are water-soluble thickening agents. These thickening agents were suspended in water at various concentrations, whereby 14 liquids with different viscous features were prepared, which were referred to as Samples T1 to T14. The samples T1 to T14 were each made to have a density of 1.05 g/mL. In this step, some of the liquids were fed with sugar such that the density was 1.05 g/mL. The thickening agents used in preparation of Samples T1 to T14 are shown in Table 1. The concentration of the thickening agent and the concentration of sugar in each of Samples T1 to T14 are shown in Table 1.

The thickening agents used in preparation of Samples T1 to T14 are as follows.

Sample T1: acacia gum (trade name: Instantgum AA, Nexira)
Sample T2: acacia gum (trade name: Instantgum BA, Nexira)
Sample T3: carboxymethyl cellulose (trade name: BiNFi-s TFo-10002, Sugino Machine Ltd.)
Samples T4 and T5: xanthan gum (trade name: SANACE E-S, San-Ei Gen F.F.I., Inc.)
Samples T6 to T9: xanthan gum (trade name: Xanthan gum granules, Unitec Foods Co., Ltd.)
Sample T10: carboxymethyl cellulose (trade name: SUNROSE® F01MC, Nippon Paper Industries Co., Ltd.)
Samples T11 and T12: gellan gum (trade name: KELCOGEL LT100, San-Ei Gen F.F.I., Inc.)
Samples T13 and T14: acacia gum and xanthan gum (trade name: Thixogum S, Nexira)

[Table 1]

| Sample | Thickening agent | Concentration of thickening agent (wt%) | Concentration of sugar (wt%) |
|---|---|---|---|
| T1 | Acacia gum | 15 | 0 |
| T2 | Acacia gum | 15 | 0 |
| T3 | Carboxymethyl cellulose | 0.2 | 13 |
| T4 | Xanthan gum | 0.02 | 13 |
| T5 | Xanthan gum | 0.04 | 13 |
| T6 | Xanthan gum | 0.05 | 13 |
| T7 | Xanthan gum | 0.1 | 13 |
| T8 | Xanthan gum | 0.5 | 13 |
| T9 | Xanthan gum | 1 | 13 |
| T10 | Carboxymethyl cellulose | 1 | 13 |
| T11 | Gellan gum | 0.02 | 13 |
| T12 | Gellan gum | 0.4 | 13 |
| T13 | Acacia gum and xanthan gum | 0.1 | 13 |
| T14 | Acacia gum and xanthan gum | 0.2 | 13 |

For these samples, the relationship between the viscosity $\eta$ at 25°C and the shear rate $\gamma$ was analyzed using any of the measurement systems DG26, SC4-18, SC4-21, or SC4-27 of the rotational viscometer ViscoQC 300-L (B-type viscometer, Anton Paar). In the case where the spindle rotational speed was 1, 2, 4, 6, 8, 10, 20, or 30 rpm, each analysis was performed for one minute. In the case where the spindle rotational speed was 40, 50, 60, 70, 80, 90, or 100 rpm, each analysis was performed for 30 seconds.

FIG. 7, FIG. 8, FIG. 9, FIG. 10, FIG. 11, and FIG. 12 each show a log-log graph of the relationship between the viscosity (25°C) of each sample and the shear rate, in which the shear rate and the viscosity are indicated with log scales.

FIG. 7 is a graph of the relationship between the viscosity of each of Samples T1 to T3 and the shear rate (□: Sample T1, Δtriangle: Sample T2, ◊: Sample T3).

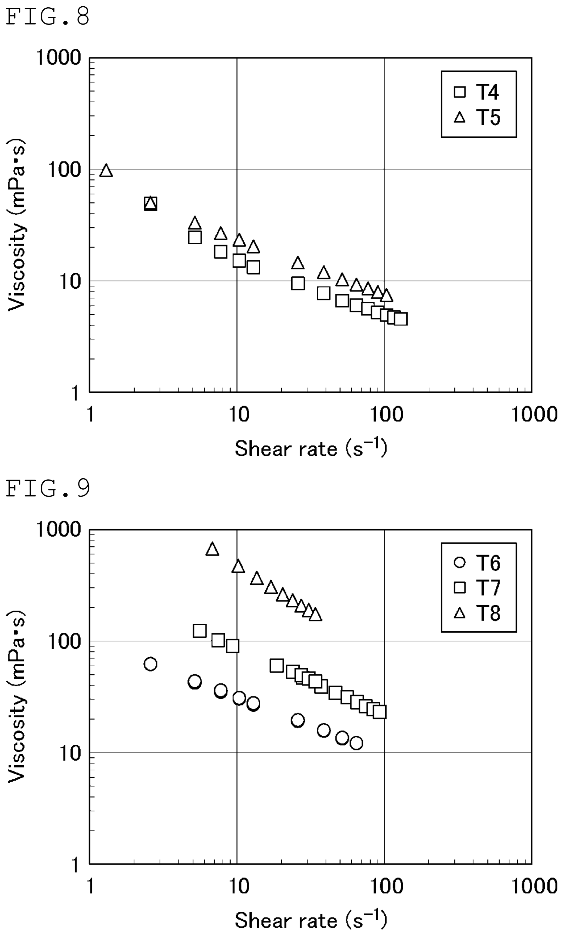

FIG. 8 is a graph of the relationship between the viscosity of each of Samples T4 and T5 and the shear rate (□: Sample T4, Δtriangle: Sample T5).

FIG. 9 is a graph of the relationship between the viscosity of each of Samples T6 to T8 and the shear rate (o: Sample T6, □: Sample T7, ◊: Sample T8).

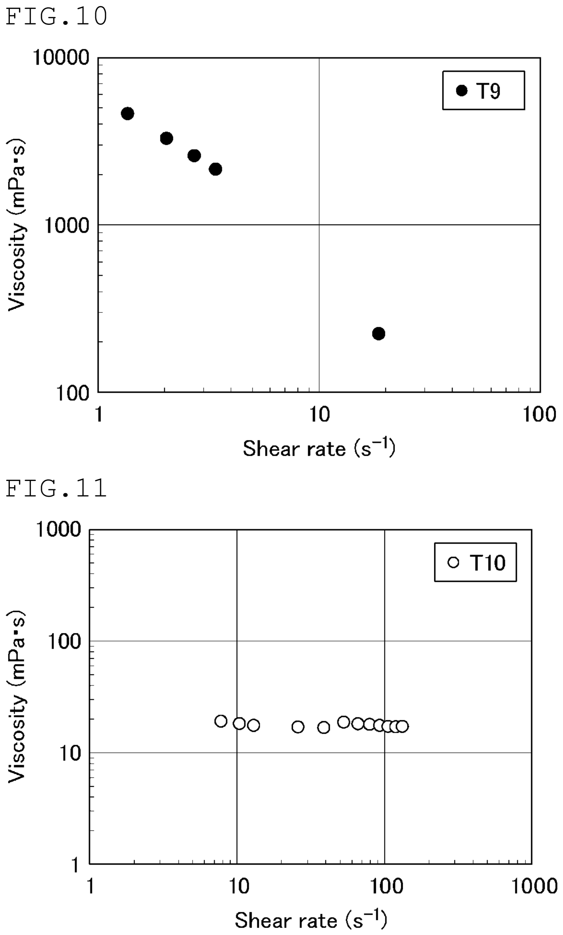

FIG. 10 is a graph of the relationship between the viscosity of Sample T9 and the shear rate (•: Sample T9).

FIG. 11 is a graph of the relationship between the viscosity of Sample T10 and the shear rate (○: Sample T10).

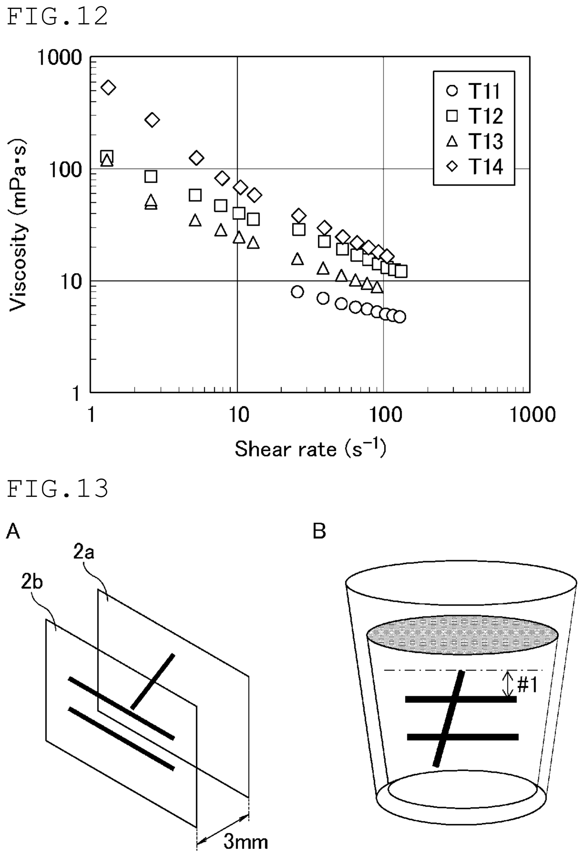

FIG. 12 is a graph of the relationship between the viscosity of each of Samples T11 to T14 and the shear rate (○:

Sample T11, □: Sample T12, △: Sample T13, ◊: Sample T14).

FIG. 7, FIG. 8, FIG. 9, FIG. 10, FIG. 11, and FIG. 12 demonstrate that liquids having a viscosity highly dependent on the shear rate $\gamma$ and liquids having a viscosity poorly dependent on the shear rate $\gamma$ were prepared in accordance with the type and concentration of the thickening agent.

Samples T4 to T9 and T11 to T14 are fluids that exhibit pseudoplasticity at 25°C. Samples T1 to T3 and T10 are fluids that exhibit no pseudoplasticity.

The viscosities (25°C) of Samples T4 to T9 and T12 to T14 at a shear rate of 10 s$^{-1}$ are listed below.

Sample T4: 15 mPa·s; Sample T5: 28 mPa·s; Sample T6: 50 mPa·s; Sample T7: 90 mPa·s; Sample T8: 471 mPa·s; Sample T9: 15 mPa·s; Sample T12: 38 mPa·s; Sample T13: 25 mPa·s; Sample T14: 50 mPa·s

The viscosities (25°C) of Samples T1 to T3 and T10 at a shear rate of 10 s$^{-1}$ are listed below.

Sample T1: 18 mPa·s; Sample T2: 13 mPa·s; Sample T3: 26 mPa·s; Sample T10: 150 mPa·s

The above viscosities at a shear rate of 10 s$^{-1}$ and at 25°C were measured under the following measurement conditions.

In the case of the measurement system DG26, the analysis was performed at a spindle rotational speed of 8 rpm for one minute (Samples T1 to T5, T9, T10, and T12 to T14). In the case of the measurement system SC4-21, the analysis was performed at a spindle rotational speed of 10 rpm for one minute (Samples T6 and T7). In the case of the measurement system SC4-27, the analysis was performed at a spindle rotational speed of 30 rpm for one minute (Sample T8).

The logarithm (log$\eta$) of the viscosity $\eta$ of each of Samples T1 to T14 and the logarithm (log$\gamma$) of the shear rate $\gamma$ were calculated and the slope ($\Delta$log$\eta$)/($\Delta$log$\gamma$) thereof was determined. Specifically, similarly to Example 1, the values in the graphs of FIGS. 7 to 12 were used in the above formula (I) to determine the slope ($\Delta$log$\eta$)/($\Delta$log$\gamma$). The slope ($\Delta$log$\eta$)/($\Delta$log$\gamma$) of each of Samples T1 to T14 determined with the above formula is shown in Table 2. The liquids having a slope of -0.1 or smaller in Table 2 are regarded as exhibiting pseudoplasticity within the shear-rate range used for determining the slope.

[Table 2]

| Sample | Slope | Sample | Slope |
|--------|-------|--------|-------|
| T1 | -0.04 | T8 | -0.88 |
| T2 | 0.05 | T9 | -1.06 |
| T3 | -0.08 | T10 | -0.03 |
| T4 | -0.38 | T11 | -0.17 |
| T5 | -0.50 | T12 | -0.47 |
| T6 | -0.51 | T13 | -0.47 |
| T7 | -0.49 | T14 | -0.62 |

For Samples T1, T2, T4, T5, T7, T10, and T12 to T14, the slope was determined using the formula (I) within a shear-rate range from 10 to 90 s$^{-1}$ ($\gamma1 = 90$, $\gamma2 = 10$). For Samples T3 and T11, the slope was determined using the formula (I) within a shear-rate range from 26 to 130 s$^{-1}$ ($\gamma1 = 130$, $\gamma2 = 26$). For Sample T6, the slope was determined using the formula (I) within a shear-rate range from 3 to 65 s$^{-1}$ ($\gamma1 = 65$, $\gamma2 = 3$). For Samples T8 and T9, the slope was determined using the formula (I) within a shear-rate range from 0.3 to 20 s$^{-1}$ ($\gamma1 = 20$, $\gamma2 = 0.3$).

Further, the logarithm (log$\eta$) of the viscosity $\eta$ of each of Samples T1 to T14 and the logarithm (log$\gamma$) of the shear rate $\gamma$ shown in FIG. 7 to FIG. 12 were subjected to regression analysis. The logarithm (log$\gamma$) of the shear rate measured and the logarithm (log$\eta$) of the viscosity at this shear rate were calculated and then subjected to linear regression analysis, determining a linear approximation formula of log$\gamma$ and log$\eta$. In this step, the residual variance Ve of the viscosity $\eta$ was determined in order to calculate the measurement error Sa of the slope. The residual variance Ve of the viscosity $\eta$ was determined by calculating the sum of squares (residual sum of squares $\Sigma(\eta_o - \eta_i)^2$) of the difference between the measured value $\eta_o$ and calculated value $\eta_i$ of the viscosity at an individual shear rate $\gamma$ and dividing the sum of squares by the degree of freedom n-2. The average $m_\gamma$ of the shear rate $\gamma$ was determined and the sum of squared deviations of the shear rate $\gamma$, $\Sigma(\gamma - m_\gamma)^2$, was calculated. The residual variance Ve of the viscosity $\eta$ was divided by the sum of squared deviations of the shear rate $\gamma$ and the square root thereof was obtained, which was defined as the standard error Sa of the slope.

Using the regression line (linear approximation formula) of the log$\eta$ and log$\gamma$, the viscosity at a shear rate of 100 s$^{-1}$ and at 25°C of the individual liquid was calculated.

The (calculated) viscosities at a shear rate of 100 s$^{-1}$ and at 25°C of Samples T1 to T14, each of which was determined from the linear approximation formula of the logarithm of the shear rate and the logarithm of the viscosity, were listed below.

Sample T1: 17 mPa·s; Sample T2: 16 mPa·s; Sample T3: 6 mPa·s; Sample T4: 5 mPa·s; Sample T5: 8 mPa·s; Sample T6: 10 mPa·s; Sample T7: 24 mPa·s; Sample T8: 65 mPa·s; Sample T9: 77 mPa·s; Sample T10: 17 mPa·s; Sample T11: 5 mPa·s; Sample T12: 13 mPa·s; Sample T13: 8 mPa·s; Sample T14: 15 mPa·s

Samples T1 to T14 prepared above were then fed into respective transparent containers and a pattern was drawn. For the purpose of pattern drawing in each of these liquids (Samples T1 to T14) to serve as drawing targets, ink was prepared in which a microparticulate was dispersed in a liquid. The ink was prepared by suspending a 1-um-diameter red polystyrene microparticulate (Polystyrene Red Dyed Microsphere 1.00 $\mu$m, density 1.05 g/mL, Polysciences Inc.) in an aqueous glycerol solution such that the microparticulate was at a final concentration of 1 wt% and the glycerol was at a final concentration of 20 wt%. This ink had a viscosity (25°C) of 2 mP·s and a density of 1.05 g/mL. The viscosity (25°C) of the ink was measured using a tuning fork vibro viscometer SV-10 (A&D Co., Ltd.). The density of the ink was measured using a density meter DMA 4500 M (Anton Paar GmbH).

The device produced in Reference Example 1 was used to draw a pattern with the ink in each of Samples T1 to T14. The ink was fed into the syringe 480 of the device and discharged through the nozzle 420 for drawing. FIG. 13A and FIG. 13B are schematic diagrams of the pattern drawn in Example 2.

As illustrated in FIG. 13B, a pattern that looks like a symbol "≠" when observed from a side of the container was drawn in the liquid to serve as a drawing target such that the upper line of a sub-pattern that looks like a symbol "=" was positioned 20 mm apart from the liquid surface while the uppermost portion of a sub-pattern that looks like a symbol "/" was positioned 10 mm apart from the liquid surface. In other words, these sub-patterns were drawn such that the distance (height difference in the liquid) between the upper line of the sub-pattern that looks like "=" and the uppermost portion of the sub-pattern that looks like "/" was 10 mm when observed from a side of the container. The length of each line of the sub-pattern that looks like "=" was set to 40 mm. As illustrated in FIG. 13A, the sub-pattern that looks like "=" and the sub-pattern that looks like "/" were drawn on respective, different drawing surfaces 2a and 2b and the distance between the drawing surfaces (2a and 2b) was set to 3 mm. The drawing was performed while the angle between the individual drawing surface and the nozzle was maintained at 30°. The order of drawing was such that the upper line of the sub-pattern that looks like "=" was first drawn, then the lower line was drawn, and finally the sub-pattern that looks like "/" was drawn from top to bottom. The nozzle speed during drawing was 20 mm/s, the nozzle acceleration during drawing was 2 mm/s$^2$, the nozzle speed to a next line was 90 mm/s, and the nozzle acceleration to a next line was 18 mm/s$^2$. The discharge flow rate of the ink was 0.7 $\mu$L/s.

The stability of the pattern drawn was evaluated as follows: immediately after the "≠" pattern was drawn, the distance (#1 in FIG. 13B, height difference in the liquid) was measured between the upper line of the sub-pattern that looks like "=" and the uppermost portion of the sub-pattern that looks like "/" when observed from a side, and this distance (mm) was used to evaluate the stability. The distance (mm) between the upper line of the sub-pattern that looks like "=" and the uppermost portion of the sub-pattern that looks like "/" is defined as the stability score. In other words, the most stable case (with a distance of 10 mm) was defined to have a stability score of 10. In the case where the sub-pattern that looks like "/" sunk 5 mm (with a distance of 5 mm), the stability score was 5. Alternatively, in the case where the sub-pattern that looks like "/" floated 5 mm (with a distance of 5 mm), the stability score was 5. A distance of 0 mm or a distance of 10 mm or greater was defined to have a stability score of 0. For example, a stability score of 8 indicates that the distance between the upper line of the sub-pattern that looks like "=" and the uppermost portion of the sub-pattern that looks like "/" was 8 mm when observed from a side.

In this process, drawing was performed five times in each liquid and the average and standard error of the stability scores were calculated.

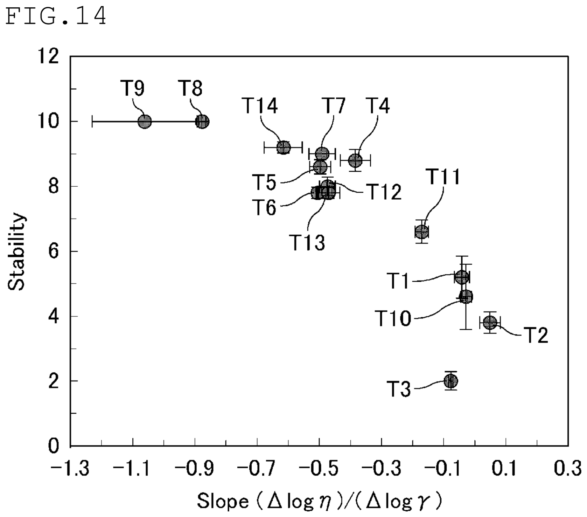

FIG. 14 is a graph of the relationship between the slope ($\Delta\log\eta$)/($\Delta\log\gamma$) of each of the liquids (Samples T1 to T14) used for drawing and the stability of a pattern in the liquid, wherein the slope is calculated using the formula (I) from the logarithm ($\log\eta$) of the viscosity $\eta$ of the liquid and the logarithm ($\log\gamma$) of the shear rate $\gamma$. The "stability" on the vertical axis of the graph shown in FIG. 14 refers to the stability score evaluated above. T1 to T14 in FIG. 14, FIG. 15, and FIG. 16 indicate Samples T1 to T14.

FIG. 14 shows a tendency such that a smaller slope ($\Delta\log\eta$)/($\Delta\log\gamma$) of the logarithm ($\log\eta$) of the viscosity $\eta$ of the liquid and the logarithm ($\log\gamma$) of the shear rate $\gamma$ leads to a higher stability of the pattern. Actually, the correlation coefficient of these values is -0.92, which confirms a strong negative correlation. In comparison with the samples that exhibit no pseudoplasticity (Samples T1 to T3 and T10), the results demonstrate that a slope ($\Delta\log\eta$)/($\Delta\log\gamma$) of -0.1 or smaller enables drawing of a pattern having a stability score of 6 or higher, i.e., stable drawing.

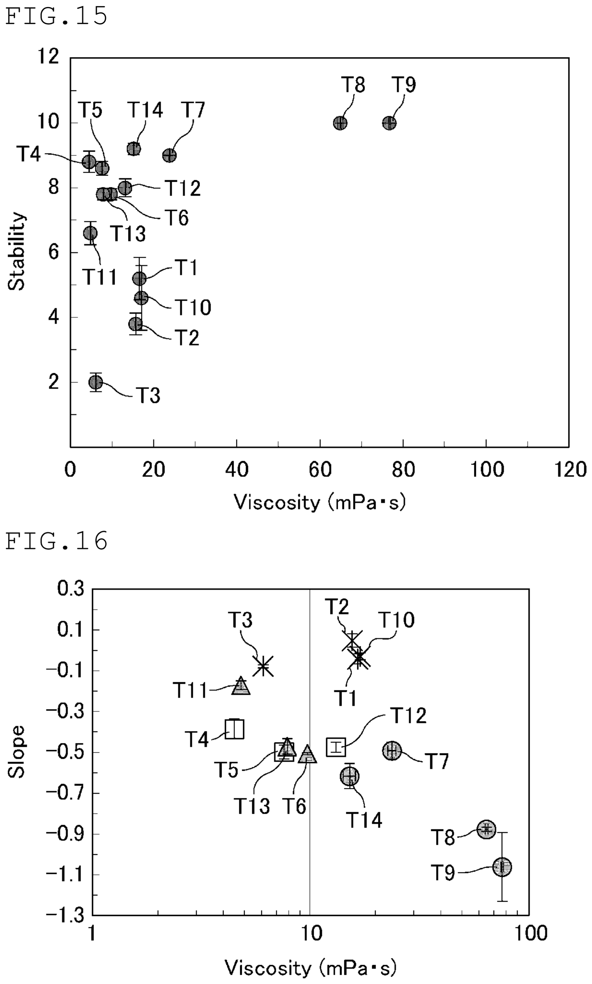

For Samples T1 to T14, regression analysis of the logarithm ($\log\eta$) of the viscosity $\eta$ and the logarithm ($\log\gamma$) of the shear rate $\gamma$ was used to calculate the viscosity (25°C) at a shear rate of 100 s$^{-1}$. The relationship between this calculated viscosity at a shear rate of 100 s$^{-1}$ and the stability score evaluated above is illustrated in FIG. 15. FIG. 15 is a graph of the relationship between the viscosity calculated above at a shear rate of 100 s$^{-1}$ and at 25°C of each liquid used for drawing and the stability of a pattern in the liquid. The "viscosity" on the horizontal axis refers to the (calculated) viscosity at a shear rate of 100 s$^{-1}$ and at 25°C. The "stability" on the vertical axis indicates the stability score. FIG. 15 shows a tendency such that, among the samples having pseudoplasticity, a higher (calculated) viscosity at a shear rate of 100 s$^{-1}$ leads to a higher stability of the pattern. The correlation coefficient of the viscosity and the stability is 0.47, which confirms a weak positive correlation.

FIG. 16 shows the relationship among the slope $(\Delta\log\eta)/(\Delta\log\gamma)$, the (calculated) viscosity at a shear rate of 100 $s^{-1}$ and at 25°C of each of Samples T1 to T14, and the stability of a pattern in the sample. The slope shown in FIG. 16 corresponds to the slope $(\Delta\log\eta)/(\Delta\log\gamma)$ determined from the logarithm $(\log\eta)$ of the viscosity $\eta$ and the logarithm $(\log\gamma)$ of the shear rate $\gamma$ using the formula (I). The horizontal axis in FIG. 16 indicates the logarithm of the (calculated) viscosity (mPa·s) at a shear rate of 100 $s^{-1}$ and at 25°C. In FIG. 16, the circles (○) indicate liquids each provided a pattern with a stability score of 9 or higher; the squares (□) with $8 \leq$ stability score $< 9$; the triangles (△) with $6 \leq$ stability score $< 8$; and the crosses (×) with a stability score smaller than 6. Comparison of liquids with similar viscosities shows a tendency such that a smaller slope leads to a more stable pattern.

These results demonstrate that using a pseudoplastic fluid as a liquid to serve as a drawing target leads to improved stability of a pattern in the liquid in comparison with a liquid that exhibits no pseudoplasticity. The results also suggest that a higher viscosity at a shear rate of 100 $s^{-1}$ of a liquid to serve as a drawing target can lead to a more stable pattern.

<Example 3>

In producing a pattern-containing liquid of which the pattern is meaningful when observed from a side of the container using the device shown in Reference Example 1, the viscous features of liquids that stabilize the pattern were examined.

Samples T15 to T18 were prepared as liquids to serve as drawing targets (liquid matrices). The samples were prepared using thickening agents commonly used for foods, i.e., pectin, carrageenan, locust bean gum, and tara gum. These are water-soluble thickening agents. These thickening agents were suspended in water at various concentrations, whereby four liquids with different viscous features were prepared, which were referred to as Samples T15 to T18. The samples T15 to T18 were each made to have a density of 1.05 g/mL. In this step, some of the liquids were fed with glycerol such that the density was 1.05 g/mL. The thickening agents used in preparation of Samples T15 to T18 are shown in Table 3. The concentration of the thickening agent and the concentration of glycerol in each of Samples T15 to T18 are shown in Table 3. The thickening agents used in preparation of the samples are as follows.

　　Sample T15: pectin (trade name: AYD3110SB, Unitec Foods Co., Ltd.)
　　Sample T16: carrageenan (trade name: SOAGEENA MW210, Mitsubishi Chemical Corp.)
　　Sample T17: locust bean gum (trade name: SOALOCUST A200, Mitsubishi Chemical Corp.)
　　Sample T18: tara gum (trade name: tara gum MT120, Mitsubishi Chemical Corp.)

[Table 3]

| Sample | Thickening agent | Concentration of thickening agent (wt%) | Concentration of glycerol (wt%) |
|--------|------------------|------------------------------------------|----------------------------------|
| T15 | Pectin | 1 | 20 |
| T16 | Carrageenan | 0.8 | 20 |
| T17 | Locust bean gum | 0.5 | 20 |
| T18 | Tara gum | 0.5 | 20 |

For these samples, the relationship between the viscosity $\eta$ at 25°C and the shear rate $\gamma$ was analyzed using the measurement system DG26 or SC4-27 of the rotational viscometer ViscoQC 300-L (B-type viscometer, Anton Paar). In the case where the spindle rotational speed was 1, 2, 4, 6, 8, 10, 20, or 30 rpm, each analysis was performed for one minute. In the case where the spindle rotational speed was 40, 50, 60, 70, 80, 90, or 100 rpm, each analysis was performed for 30 seconds.

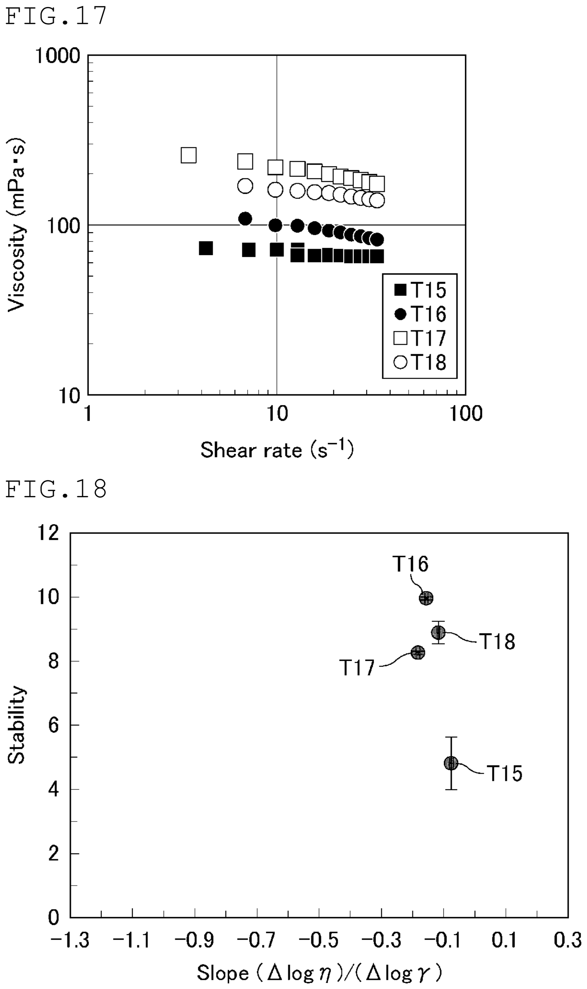

FIG. 17 illustrates the relationship between the viscosity (25°C) of each sample and the shear rate (black square: Sample T15, ●: Sample T16, □: Sample T17, ○: Sample T18). The graph shown in FIG. 17 is a log-log graph in which the shear rate and the viscosity are indicated with log scales.

FIG. 17 demonstrates that liquids having a viscosity highly dependent on the shear rate $\gamma$ and liquids having a viscosity poorly dependent on the shear rate $\gamma$ were prepared in accordance with the type and concentration of the thickening agent. Samples T16 to T18 are fluids exhibiting pseudoplasticity at 25°C. Sample T15 is a fluid that exhibits no pseudoplasticity.

The viscosities (25°C) of Samples T15, T16, T17, and T18 at a shear rate of 10 $s^{-1}$ are listed below.

Sample T15: 72 mPa·s; Sample T16: 100 mPa·s; Sample T17: 219 mPa·s; Sample T18: 161 mPa·s

The above viscosities at a shear rate of 10 $s^{-1}$ and at 25°C were evaluated using the measurement system SC4-27 at a spindle rotational speed of 30 rpm for one minute.

The logarithm ($\log\eta$) of the viscosity $\eta$ of each of Samples T15 to T18 and the logarithm ($\log\gamma$) of the shear rate $\gamma$ were calculated and the slope ($\Delta\log\eta$)/($\Delta\log\gamma$) thereof was determined. Specifically, similarly to Example 1, the slope ($\Delta\log\eta$)/($\Delta\log\gamma$) was determined by the above formula (I).

The slope ($\Delta\log\eta$)/($\Delta\log\gamma$) of each of Samples T15 to T18 determined with the formula is shown in Table 4. The liquids having a slope of -0.1 or smaller in Table 4 are regarded as exhibiting pseudoplasticity within the shear-rate range used for determining the slope.

[Table 4]

| Sample | Slope |
|--------|-------|
| T15 | -0.08 |
| T16 | -0.16 |
| T17 | -0.18 |
| T18 | -0.12 |

For Sample T15, the slope was determined using the formula (I) within a shear-rate range from 13 to 34 s$^{-1}$ ($\gamma 1$ = 34, $\gamma 2$ = 13). For Samples T16, T17, and T18, the slope was determined using the formula (I) within a shear-rate range from 10 to 34 s$^{-1}$ ($\gamma 1$ = 34, $\gamma 2$ = 10).

Further, the logarithm ($\log\eta$) of the viscosity $\eta$ of each of Samples T15 to T18 and the logarithm ($\log\gamma$) of the shear rate $\gamma$ shown in FIG. 17 were subjected to regression analysis. The logarithm ($\log\gamma$) of the shear rate measured and the logarithm ($\log\eta$) of the viscosity at this shear rate were calculated and then subjected to linear regression analysis, determining a linear approximation formula of $\log\gamma$ and $\log\eta$. In this step, the residual variance Ve of the viscosity $\eta$ was determined in order to calculate the measurement error Sa of the slope. The residual variance Ve of the viscosity $\eta$ was determined by calculating the sum of squares (residual sum of squares $\Sigma(\eta_o - \eta_i)^2$) of the difference between the measured value $\eta_o$ and calculated value $\eta_i$ of the viscosity at an individual shear rate $\gamma$ and dividing the sum of squares by the degree of freedom n-2. The average $m_\gamma$ of the shear rate $\gamma$ was determined and the sum of squared deviations of the shear rate $\gamma$, $\Sigma(\gamma - m_\gamma)^2$, was calculated. The residual variance Ve of the viscosity $\eta$ was divided by the sum of squared deviations of the shear rate $\gamma$ and the square root thereof was obtained, which was defined as the standard error Sa of the slope.

Using the regression line (linear approximation formula) of the $\log\eta$ and $\log\gamma$, the viscosity at a shear rate of 100 s$^{-1}$ and at 25°C of the individual liquid was calculated.

The (calculated) viscosities at a shear rate of 100 s$^{-1}$ and at 25°C of Samples T15 to T18, each of which was determined from the linear approximation formula of the logarithm of the shear rate and the logarithm of the viscosity, were listed below.

Sample T15: 60 mPa·s; Sample T16: 70 mPa·s; Sample T17: 149 mPa·s; Sample T18: 125 mPa·s

Samples T15 to T18 prepared above were then fed into respective transparent containers and a pattern was drawn. For the purpose of pattern drawing in each of these liquids (Samples T15 to T18) to serve as drawing targets, ink was prepared in which a microparticulate was dispersed in a liquid. The ink was prepared by suspending a 1-um-diameter red polystyrene microparticulate (Polystyrene Red Dyed Microsphere 1.00 $\mu$m, density 1.05 g/mL, Polysciences Inc.) in an aqueous glycerol solution such that the microparticulate was at a final concentration of 1 wt% and the glycerol was at a final concentration of 20 wt%. This ink had a viscosity (25°C) of 2 mP·s and a density of 1.05 g/mL.

The viscosity (25°C) of the ink was measured using a tuning fork vibro viscometer SV-10 (A&D Co., Ltd.). The density of the ink was measured using a density meter DMA 4500 M (Anton Paar GmbH).

The device produced in Reference Example 1 was used to draw a pattern with the ink in each of Samples T15 to T18 under the same conditions as in Example 2, and the stability was evaluated. In this process, drawing was performed three times in each liquid and the average and standard error of the stability scores were calculated.

FIG. 18 is a graph of the relationship between the slope ($\Delta\log\eta$)/($\Delta\log\gamma$) of each of the liquids (Samples T15 to T18) used for drawing and the stability of a pattern in the liquid, wherein the slope is calculated using the formula (I) from the logarithm ($\log\eta$) of the viscosity $\eta$ of the liquid and the logarithm ($\log\gamma$) of the shear rate $\gamma$. The "stability" on the vertical axis of the graph shown in FIG. 18 refers to the stability score evaluated above. T15 to T18 in FIG. 18, FIG. 19, and FIG. 20 indicate Samples T15 to T18.

FIG. 18 shows that a slope ($\Delta\log\eta$)/($\Delta\log\gamma$) of -0.12 or smaller, where $\log\eta$ represents the logarithm of the viscosity $\eta$ of the liquid and $\log\gamma$ represents the logarithm of the shear rate $\gamma$, enables drawing of a pattern having a stability score of 8 or higher, i.e., stable drawing.

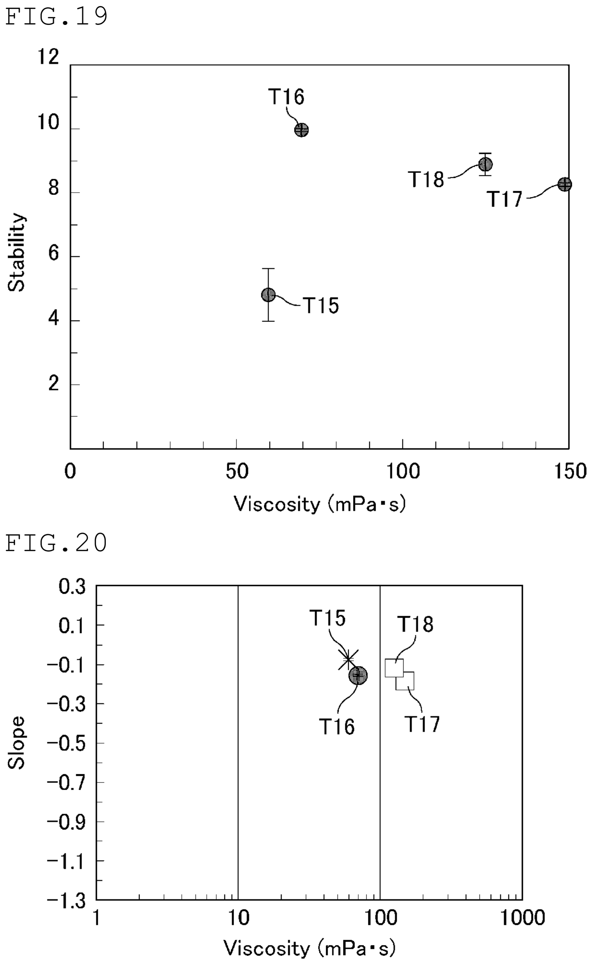

For Samples T15 to T18, regression analysis of the logarithm ($\log\eta$) of the viscosity $\eta$ and the logarithm ($\log\gamma$) of the shear rate $\gamma$ was used to calculate the viscosity (25°C) at a shear rate of 100 s$^{-1}$. The relationship between this calculated viscosity at a shear rate of 100 s$^{-1}$ and the stability score evaluated above is illustrated in FIG. 19. FIG. 19 is a graph of the relationship between the viscosity calculated above at a shear rate of 100 s$^{-1}$ and at 25°C of each liquid used for drawing and the stability of a pattern in the liquid. The "viscosity" on the horizontal axis refers to the (calculated) viscosity at a shear rate of 100 s$^{-1}$ and at 25°C. The "stability" on the vertical axis indicates the stability score.

FIG. 20 shows the relationship among the slope $(\Delta\log\eta)/(\Delta\log\gamma)$, the (calculated) viscosity at a shear rate of 100 s$^{-1}$ and at 25°C of each of Samples T15 to T18, and the stability of a pattern in the sample. The slope shown in FIG. 20 corresponds to the slope $(\Delta\log\eta)/(\Delta\log\gamma)$ determined from the logarithm $(\log\eta)$ of the viscosity $\eta$ and the logarithm $(\log\gamma)$ of the shear rate $\gamma$ using the formula (I). The horizontal axis in FIG. 20 indicates the logarithm of the (calculated) viscosity (mPa·s) at a shear rate of 100 s$^{-1}$ and at 25°C. In FIG. 20, similarly to FIG. 16, the circles (○) indicate liquids each provided a pattern with a stability score of 9 or higher; the squares (□) with $8 \leq$ stability score < 9; the triangles (△) with $6 \leq$ stability score < 8; and the crosses (×) with a stability score smaller than 6.

These results are not inconsistent with the results in Example 2 and demonstrate that using a pseudoplastic fluid as a liquid to serve as a drawing target leads to improved stability of a pattern in the liquid in comparison with a liquid that exhibits no pseudoplasticity. The results also demonstrate that, in order to form a stable pattern in a liquid, the slope $(\Delta\log\eta)/(\Delta\log\gamma)$ of the liquid calculated by the formula (I) is preferably -0.12 or smaller.

<Example 4>

Evaluation was made on the difference in stability over time of the resulting representation among the types of thickening agents added to the liquids to serve as drawing targets. The liquids to serve as drawing targets used were Samples T3, T7, T10, T11, and T15 to T18 prepared in Examples 2 and 3. The ink used was the same ink as in Example 2 (ink in which a microparticulate was dispersed in a liquid).

The device produced in Reference Example 1 was used to draw a pattern with the ink in each of Samples T3, T7, T10, T11, and T15 to T18. The ink was fed into the syringe 480 of the device and discharged through the nozzle 420 for drawing. Also, in Example 4, the pattern illustrated in the schematic views of FIG. 13A and FIG. 13B was drawn under the same conditions as in Example 2. The length of each line of the sub-pattern that looks like "=" when observed from a side of the container, illustrated in FIG. 13B, was set to 40 mm.

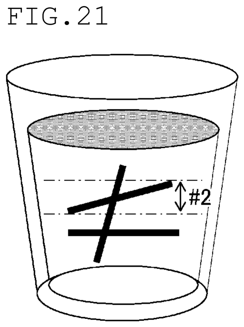

The pattern drawn was observed from a side of the container (the front of the drawing surface). An evaluation of the stability of this pattern drawn was performed on the upper line of the sub-pattern that looks like "=" immediately after the drawing of the "≠" pattern. Specifically, while the drawn line deformed over time, the height difference (#2 in FIG. 21) of the deformed line was measured between the position closest to the liquid surface and the position closest to the bottom. The value obtained by subtracting 10 from the resulting height difference (mm) was defined as the stability score. Thus, the stability score in the most stable case (with a distance of 0 mm) was 10. In the case where the line deformed and the height difference of the line between the uppermost portion and the lowermost portion was 5 mm, the stability score was 5. The stability score was 0 in the case where the height difference was 10 mm or greater. For example, in the case where the upper line of the sub-pattern that looks like "=" deformed when observed from a side, a stability score of 8 indicates that the height difference of the line between the uppermost portion and the lowermost portion was 2 mm.

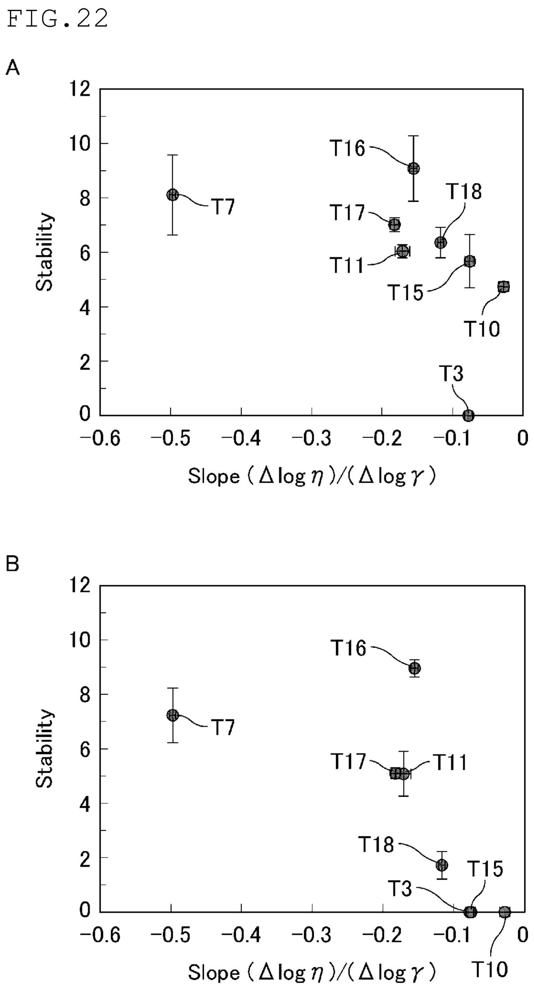

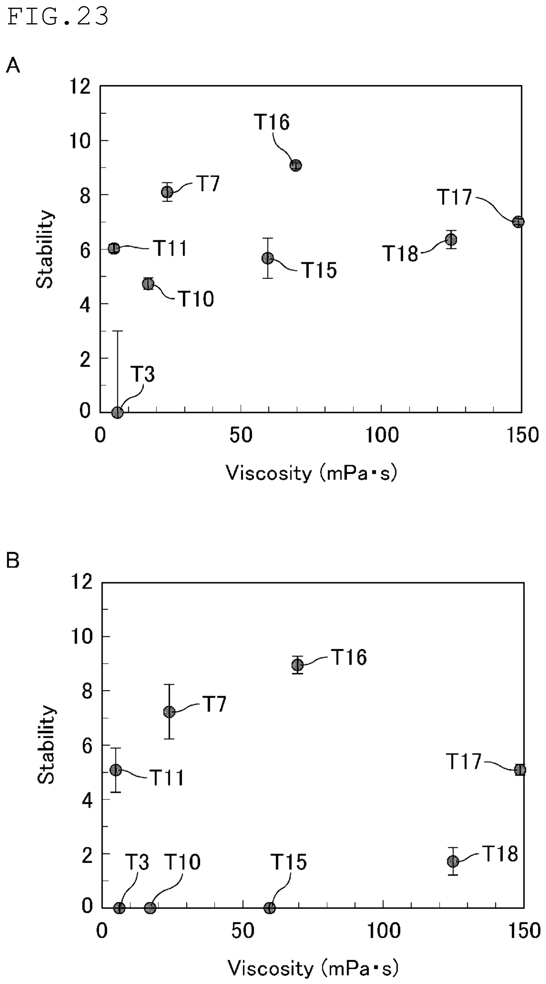

In Example 4, drawing was performed three times in each liquid and the average and standard error of the stability scores were calculated. FIG. 22A and FIG. 22B are graphs of the relationship between the slope $(\Delta\log\eta)/(\Delta\log\gamma)$ of each liquid used for drawing (Sample T3, T7, T10, T11, and T15 to T18) and the stability of a pattern in the liquid, wherein the slope is calculated by the formula (I) from the logarithm $(\log\eta)$ of the viscosity $\eta$ of the liquid and the logarithm $(\log\gamma)$ of the shear rate $\gamma$ (FIG. 22A: immediately after the drawing, FIG. 22B: one minute after the drawing). The "stability" on the vertical axis of the graph shown in FIG. 22A refers to the stability score evaluated above immediately after the drawing. The "stability" on the vertical axis of the graph shown in FIG. 22B refers to the stability score evaluated above one minute after the drawing. T3, T7, T10, T11, and T15 to T18 in FIG. 22A, FIG. 22B, FIG. 23A, and FIG. 23B respectively indicate Samples T3, T7, T10, T11, and T15 to T18.

FIG. 22A and FIG. 22B show a tendency such that a smaller slope $(\Delta\log\eta)/(\Delta\log\gamma)$ of the logarithm $(\log\eta)$ of the viscosity $\eta$ of the liquid and the logarithm $(\log\gamma)$ of the shear rate $\gamma$ leads to a higher stability of the pattern. In particular, the results demonstrate that a slope $(\Delta\log\eta)/(\Delta\log\gamma)$ of -0.12 or smaller allows a pattern to be maintained with a one-minute stability score of 2 or higher in comparison with the samples that exhibit no pseudoplasticity, i.e., stable drawing.

For Samples T3, T7, T10, T11, and T15 to T18, regression analysis of the logarithm $(\log\eta)$ of the viscosity $\eta$ and the logarithm $(\log\gamma)$ of the shear rate $\gamma$ was used to calculate the viscosity (25°C) at a shear rate of 100 s$^{-1}$. The relationship between this calculated viscosity at a shear rate of 100 s$^{-1}$ and the stability score evaluated above is illustrated in FIG. 23A and FIG. 23B (FIG. 23A: immediately after the drawing, FIG. 23B: one minute after the drawing). FIG. 23A is a graph of the relationship between the viscosity calculated above at a shear rate of 100 s$^{-1}$ and at 25°C of each liquid used for drawing and the stability of a pattern immediately after the drawing. FIG. 23B is a graph of the relationship between the viscosity calculated above at a shear rate of 100 s$^{-1}$ and at 25°C of each liquid used for drawing and the stability of a pattern one minute after the drawing. The "viscosity" on the horizontal axis refers to the (calculated) viscosity at a shear rate of 100 s$^{-1}$

and 25°C. The "stability" on the vertical axis indicates the stability score.

These results demonstrate that using a pseudoplastic fluid as a liquid to serve as a drawing target leads to improved stability of a pattern in the liquid in comparison with a liquid that exhibits no pseudoplasticity. The results also demonstrate that, in order to form a stable pattern in a liquid, the slope $(\Delta\log\eta)/(\Delta\log\gamma)$ of the liquid calculated by the formula (I) is preferably -0.12 or smaller.

<Example 5>

In producing a pattern-containing liquid using the device shown in Reference Example 1, the viscous features of liquids that stabilize the pattern were examined.

The ink was prepared by suspending an aqueous suspension of a 1-μm-diameter red polystyrene microparticulate (Polystyrene Red Dyed Microsphere 1.00 μm, density 1.05 g/mL, Polysciences Inc.) in an aqueous glycerol solution such that the microparticulate was at a final concentration of 0.5 wt%, the thickening agent was at a final concentration of 0.02 wt% or 0.03 wt%, and the glycerol was at a final concentration of 20 wt%. The thickening agent used was xanthan gum (trade name: Xanthan gum granules, Unitec Foods Co., Ltd.). The xanthan gum concentrations in the ink (Sample IX-1, IX-2, and IX-4) prepared are listed below. Sample IX-4 is a xanthan-gum-free ink prepared by suspending the polystyrene microparticulate (final concentration 0.5 wt%) in a 20 wt% aqueous glycerol solution.

Xanthan gum concentrations in ink samples
Sample IX-1: 0.02 wt%, Sample IX-2: 0.03 wt%, Sample IX-4: 0 wt%

Separately from the above ink samples, aqueous glycerol solutions (final glycerol concentration 20 wt%) containing 0.02 wt%, 0.03 wt%, or 0.05 wt% of xanthan gum and an aqueous glycerol solution (final glycerol concentration 20 wt%) containing no xanthan gum were prepared, which were referred to as Samples X-1 to X-4. Samples X-1 to X-4 were not mixed with a polystyrene microparticulate. For these aqueous glycerol solutions containing xanthan gum, the relationship between the viscosity η at 25°C and the shear rate γ was analyzed using the measurement system DG26 or SC4-27 of the rotational viscometer ViscoQC 300-L (B-type viscometer, Anton Paar). In the case where the spindle rotational speed was 1, 2, 4, 6, 8, 10, 20, or 30 rpm, each analysis was performed for one minute. In the case where the spindle rotational speed was 40, 50, 60, 70, 80, 90, or 100 rpm, each analysis was performed for 30 seconds.

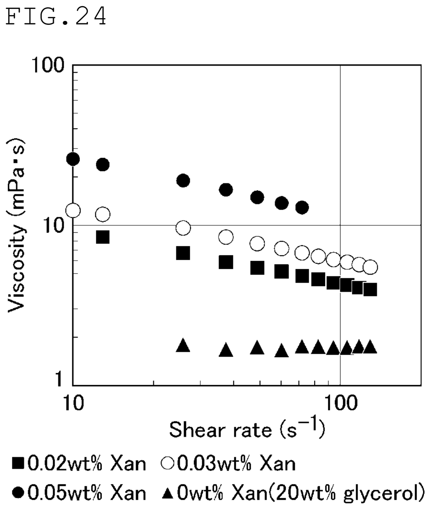

FIG. 24 shows the relationship between the viscosity (25°C) of an aqueous glycerol solution (final glycerol concentration 20 wt%) with xanthan gum added thereto and the shear rate (black square: 0.02 wt% aqueous solution with xanthan gum (Sample X-1), ○: 0.03 wt% aqueous solution with xanthan gum (Sample X-2), •: 0.05 wt% aqueous solution with xanthan gum (Sample X-3), triangle: aqueous glycerol solution without xanthan gum (Sample X-4)). The aqueous solutions with xanthan gum exhibited pseudoplasticity. The relationship between the viscosity (25°C) of the aqueous solution (Sample X-4) containing glycerol alone at a final concentration of 20 wt% and the shear rate was a Newtonian relationship.

The viscosities (25°C) of Samples X-1 to X-4 at a shear rate of 10 s$^{-1}$ were as follows: 0.02 wt% aqueous solution with xanthan gum (X-1): 9 mPa·s; 0.03 wt% aqueous solution with xanthan gum (X-2): 12 mPa·s; 0.05 wt% aqueous solution with xanthan gum (X-3): 26 mPa·s; and 20 wt% aqueous solution with glycerol (X-4): 2 mPa·s. The above viscosities at a shear rate of 10 s$^{-1}$ and at 25°C were evaluated using the measurement system DG26 at a spindle rotational speed of 8 rpm for one minute. The xanthan gum concentrations and the glycerol concentrations of Samples X-1, X-2, and X-4 are the same as those of the ink samples IX-1, IX-2, and IX-4, respectively. The ink samples IX-1, IX-2, and IX-4, prepared by adding a 0.5 wt% polystyrene microparticulate respectively to Samples X1, X-2, and X-4, are also considered to exhibit viscous features equivalent to those of the samples.

The logarithm (logη) of the viscosity η of each sample and the logarithm (log○) of the shear rate γ were calculated and the slope $(\Delta\log\eta)/(\Delta\log\gamma)$ thereof was determined. Specifically, similarly to Example 1, the slope $(\Delta\log\eta)/(\Delta\log\gamma)$ was determined by the above formula (I). The slope $(\Delta\log\eta)/(\Delta\log\gamma)$ of each sample determined with the above formula is shown in Table 5. The liquids having a slope of -0.1 or smaller in Table 5 are regarded as exhibiting pseudoplasticity within the shear-rate range used for determining the slope.

[Table 5]

| Sample | Concentration of xanthan gum (wt%) | Slope |
|---|---|---|
| X-1 | 0.02 | -0.31 |
| X-2 | 0.03 | -0.31 |
| X-3 | 0.05 | -0.31 |

(continued)

| Sample | Concentration of xanthan gum (wt%) | Slope |
|--------|-----------------------------------|-------|
| X-4 | 0 | 0.07 |

For Sample X-1, the slope was determined using the formula (I) within a shear-rate range from 10 to 129 s$^{-1}$ ($\gamma$1 = 129, $\gamma$2 = 10). For Sample X-2, the slope was determined using the formula (I) within a shear-rate range from 7 to 129 s$^{-1}$ ($\gamma$1 = 129, $\gamma$2 = 7). For Sample X-3, the slope was determined using the formula (I) within a shear-rate range from 1 to 72 s$^{-1}$ ($\gamma$1 = 72, $\gamma$2 = 1). For Sample X-4, the slope was determined using the formula (I) within a shear-rate range from 60 to 129 s$^{-1}$ ($\gamma$1 = 129, $\gamma$2 = 60).

Further, the logarithm (log$\eta$) of the viscosity $\eta$ of each of Samples X-1 to X-4 and the logarithm (log$\gamma$) of the shear rate $\gamma$ shown in FIG. 24 were subjected to regression analysis. The logarithm (log$\gamma$) of the shear rate measured and the logarithm (log$\eta$) of the viscosity at this shear rate were calculated and then subjected to linear regression analysis, determining a linear approximation formula of log$\gamma$ and log$\eta$. Using the regression line (linear approximation formula) of the log$\eta$ and log$\gamma$, the viscosity at a shear rate of 100 s$^{-1}$ and at 25°C of the individual liquid was calculated.

The (calculated) viscosities at a shear rate of 100 s$^{-1}$ and at 25°C of Samples X-1 to X-4, each of which was determined from the linear approximation formula of the logarithm of the shear rate and the logarithm of the viscosity, were listed below. Sample X-1: 4 mPa·s, Sample X-2: 6 mPa·s, Sample X-3: 12 mPa·s, and Sample X-4: 2 mPa·s.

Then, a pseudoplastic liquid (liquid matrix) to serve as a drawing target was prepared by suspending xanthan gum (trade name: Xanthan gum granules, Unitec Foods Co., Ltd.) in an aqueous glycerol solution such that the final concentration of xanthan gum was 0.05 wt% and the final concentration of glycerol was 20 wt%. Also, a Newtonian liquid to serve as a drawing target was prepared by suspending glycerol to a final concentration of 20 wt% in water. These liquids each had a density of 1.05 g/mL.

Transparent containers were each fed with the pseudoplastic liquid, 3 mL, to serve as a drawing target prepared above and, using the device produced in Reference Example 1, a dot was drawn with each of Samples IX-1 and IX-2 as ink. Similarly, Sample IX-4 without xanthan gum was used as ink to draw a dot.

In a control, 3 mL of an aqueous glycerol solution without a thickening agent was used as a drawing target and Sample IX-4 without xanthan gum was used as ink to draw a dot.

In this step, a nozzle was moved at a nozzle speed of 30 mm/s to a position where a dot is to be drawn and the ink was discharged at 1 $\mu$L/s for two seconds. The nozzle was left to stand without movement for 20 seconds and then withdrawn at a nozzle speed of 100 mm/s. The representations immediately after withdrawing the nozzle (0 s) and 30 seconds after the drawing (30 s) were photographed and, using the images, the length in the vertical direction of each of the resulting dots were measured. This test was repeated 10 times (N = 10) for each sample. The average and the variance were determined, and the difference of each value was evaluated by the Tukey method, with p < 0.01 taken as the presence of significant difference.

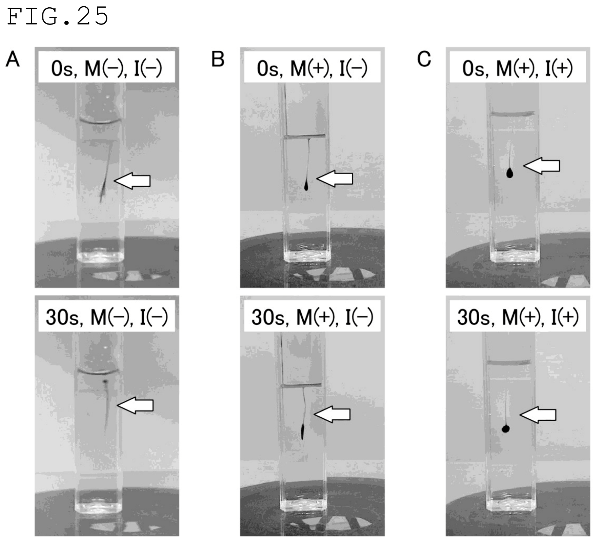

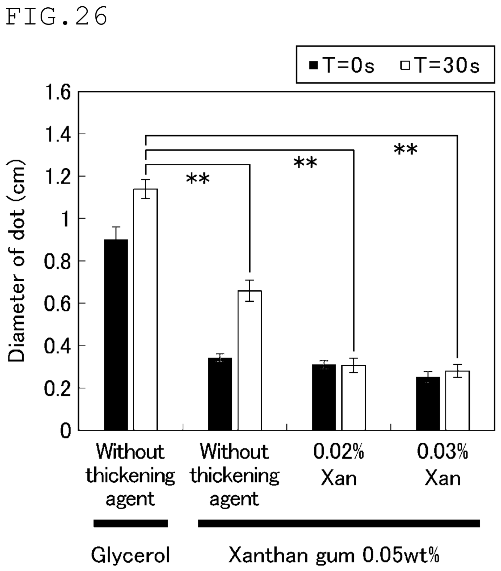

The results are shown in FIG. 25A, FIG. 25B, FIG. 25C, and FIG. 26. FIG. 25A, FIG. 25B, and FIG. 25C are photographs of the dot patterns drawn in the liquid matrices in Example 5. These photographs were each taken from a side of the container after the drawing was performed by the above method in the liquid to serve as a drawing target in the container. The samples with a pseudoplastic liquid used as a liquid matrix are expressed by M(+), while the samples with a non-pseudoplastic liquid by M(-). The samples with a pseudoplastic ink are expressed by I(+), while the samples with a non-pseudoplastic ink by I(-).

FIG. 25A shows a dot pattern drawn with Sample IX-4 in a liquid that exhibits no pseudoplasticity. FIG. 25B shows a dot pattern drawn with Sample IX-4 in a pseudoplastic liquid. FIG. 25C shows a dot pattern drawn with Ink Sample IX-1 in a pseudoplastic liquid. The upper images of FIG. 25A, FIG. 25B, and FIG. 25C are those immediately after the drawing (0 s), while the lower images are those 30 seconds after the drawing (30 s).

FIG. 26 is a graph of the change over time of the length of each dot pattern in the vertical direction drawn in Example 5 (**: p < 0.01). The results are expressed by average ± standard error (S.E.) (N = 10). The "glycerol" at the lower part of the horizontal axis represents the sample using a xanthan-gum-free aqueous glycerol solution (non-pseudoplastic liquid) as a liquid (liquid matrix) to serve as a drawing target. "Xanthan gum 0.05 wt%" represents the samples using, as a liquid to serve as a drawing target, an aqueous glycerol solution containing 0.05 wt% of xanthan gum. "Without thickening agent" at the upper part of the horizontal axis represents the samples with Sample IX-4 used as ink for drawing. "0.02% Xan" and "0.03% Xan" represent the samples with Sample IX-1 and Sample IX-2, respectively, used as ink for drawing. The "Diameter of dot" on the vertical axis represents the length of the dot pattern in the vertical direction drawn with ink. The black bars represent the values immediately after the drawing, while the white bars represent the values 30 seconds after the drawing.

The results show a tendency such that using a fluid that exhibits no pseudoplasticity as a liquid to serve as a drawing target causes upward-and-downward extension of the ink immediately after the drawing (FIG. 25A, top (0 s)). In contrast, drawing using an ink without a thickening agent in a pseudoplastic drawing target showed a dot shape immediately after the drawing. The results show a tendency such that the ink extends upward and downward 30 seconds after the drawing, but this extension of the dot pattern is smaller in comparison with the sample shown in FIG. 25A (FIG. 25B, bottom (30 s)). Drawing using the ink of Sample IX-1 having pseudoplasticity in the pseudoplastic fluid well reduced extension of the dot pattern even 30 seconds after the drawing (FIG. 25C, bottom (30 s)). Also, drawing using Sample IX-2 in the pseudoplastic drawing target well reduced extension of the dot pattern after the drawing similarly to the case of Sample IX-1. These results demonstrate that imparting pseudoplasticity to the drawing target increases the drawing stability as well as imparting pseudoplasticity to the ink further stabilizes the pattern after the drawing (FIG. 26).

REFERENCE SIGNS LIST

2a, 2b: drawing surface
10: pattern-forming material
11: microparticulate
12: dispersion medium
20: liquid matrix
30: pattern
40: container
100, 200, 300: device for producing pattern-containing liquid
110, 210, 310: tank
120, 220, 320, 420: nozzle
130: pump
140: controller
150, 250: stage
151, 152: liquid delivery tube
153, 253, 353: angle-control mechanism
260: gantry system
261: x-axial rail
262: z-axial rail
263: z-axial drive motor
264: y-axial rail
265: y-axial drive motor
360: robot arm
460: human collaborative robot
470: syringe extruder
480: syringe

**Claims**

1. A pattern-containing liquid comprising a pattern formed from at least one of a microparticulate or a colorant in a liquid matrix,

   the liquid matrix being a pseudoplastic fluid, and
   the liquid matrix being contained in a container.

2. The pattern-containing liquid according to claim 1,
   wherein the liquid matrix is a fluid that exhibits pseudoplasticity at least within a predetermined subrange of a shear-rate range from 0.3 to 130 $s^{-1}$.

3. The pattern-containing liquid according to claim 1 or 2,
   wherein the liquid matrix is a fluid that satisfies the following formula (I) at least within a predetermined subrange of a shear-rate range from 0.3 to 130 $s^{-1}$:

$$\log(\eta 1/\eta 2)/\log(\gamma 1/\gamma 2) \leq -0.12 \quad \text{Formula (I)}$$

wherein $\eta 1$ represents a viscosity (mPa·s) of the fluid at a shear rate $\gamma 1$ (s$^{-1}$); $\eta 2$ represents a viscosity (mPa·s) of the fluid at a shear rate $\gamma 2$ (s$^{-1}$); and $\gamma 1$ and $\gamma 2$ satisfy $0.3 \leq \gamma 2 < \gamma 1 \leq 130$, the viscosities being those at 25°C.

4. The pattern-containing liquid according to claim 1 or 2,
   wherein the liquid matrix has a viscosity of 4 mPa·s or higher at a shear rate of 100 s$^{-1}$ and at 25°C, with the viscosity being determined from a linear approximation formula of a logarithm of the shear rate and a logarithm of the viscosity.

5. The pattern-containing liquid according to claim 1 or 2,
   wherein the liquid matrix contains water and a water-soluble thickening agent.

6. The pattern-containing liquid according to claim 5,
   wherein the water-soluble thickening agent is at least one selected from the group consisting of xanthan gum, gellan gum, locust bean gum, tara gum, and carrageenan.

7. The pattern-containing liquid according to claim 1 or 2,
   wherein the pattern-containing liquid is a beverage.

8. A method for producing a pattern-containing liquid, the method comprising

   discharging a pattern-forming material containing at least one of a microparticulate or a colorant dispersed in a dispersion medium into a liquid matrix contained in a container using a nozzle to form a pattern of the at least one of the microparticulate or the colorant in the liquid matrix,
   the liquid matrix being a pseudoplastic fluid.

9. The method for producing a pattern-containing liquid according to claim 8,
   wherein the dispersion medium is a pseudoplastic fluid.

10. Use of a pseudoplastic fluid as a matrix of a pattern-containing liquid.

FIG.1

FIG.2

FIG.3

FIG.4

FIG.5

FIG.6

A:CMC-a                    B:CMC-b

FIG.7

FIG.8

FIG.9

FIG.10

FIG.11

FIG.12

FIG.13

A

B

FIG.14

FIG.15

FIG.16

FIG.17

FIG.18

FIG.19

FIG.20

FIG.21

FIG.22

A

B

FIG.23

FIG.24

■0.02wt% Xan  ○0.03wt% Xan
●0.05wt% Xan  ▲0wt% Xan(20wt% glycerol)

FIG.25

FIG.26

## INTERNATIONAL SEARCH REPORT

International application No.

**PCT/JP2023/046322**

| A. | CLASSIFICATION OF SUBJECT MATTER |
|---|---|

*A23L 2/00*(2006.01)i; *A23L 2/52*(2006.01)i; *A23L 29/206*(2016.01)i; *A23L 29/238*(2016.01)i; *A23L 29/256*(2016.01)i; *A23L 29/262*(2016.01)i; *A23L 29/269*(2016.01)i; *A61K 8/02*(2006.01)i; *A61K 8/73*(2006.01)i; *A61K 9/06*(2006.01)i; *A61K 47/36*(2006.01)i; *B33Y 10/00*(2015.01)i

FI: A23L2/00 W; A23L2/52; A23L29/269; A23L29/238; A23L29/256; A23L29/206; A23L29/262; A61K9/06; A61K47/36; A61K8/02; A61K8/73; B33Y10/00

According to International Patent Classification (IPC) or to both national classification and IPC

| B. | FIELDS SEARCHED |
|---|---|

Minimum documentation searched (classification system followed by classification symbols)

A23L2/00; A23L2/52; A23L29/206; A23L29/238; A23L29/256; A23L29/262; A23L29/269; A61K8/02; A61K8/73; A61K9/06; A61K47/36; B33Y10/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

日経テレコン; Google

| C. | DOCUMENTS CONSIDERED TO BE RELEVANT |
|---|---|

| Category* | Citation of document, with indication, where appropriate, of the relevant passages | Relevant to claim No. |
|---|---|---|
| X | サントリーグローバルイノベーションセンター（株）において開発中の製品3点が「CES 2023 Innovation Awards」を受賞 －サントリーグループとして初めてCESに出展－, サントリーホールディングス株式会社ニュースリリース [online], 24 November 2022, pp. 1-4, [retrieved on 05 March 2024, retrieved from the internet], https://www.suntory.co.jp/news/article/mt_items/14273.pdf, non-official translation (Three products under development at SUNTORY GLOBAL INNOVATION CENTER LTD. received the "CES 2023 Innovation Awards" -SUNTORY GROUP's first exhibition at CES-. SUNTORY HOLDINGS LIMITED News Releases.) <br> p. 3 | 1-10 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 March 2024** | **19 March 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**

| International application No. |
| --- |
| **PCT/JP2023/046322** |

C.    DOCUMENTS CONSIDERED TO BE RELEVANT

| Category* | Citation of document, with indication, where appropriate, of the relevant passages | Relevant to claim No. |
| --- | --- | --- |
| A | Print a Drink 3D Prints Designs Inside a Cocktail, Develops Smaller Machine for Corporations. THE SPOON [online]. 10 June 2021, pp. 1-8, [retrieved on 05 March 2024, retrieved from the internet], https://thespoon.tech/print-a-drink-3d-prints-designs-inside-a-cocktail-develops-smaller-machine-for-corporations/<br>main text, photographs | 1-10 |
| A | US 2021/0138718 A1 (GREIMEL, Benjamin) 13 May 2021 (2021-05-13)<br>claims, drawings | 1-10 |
| P, X | WO 2023/026862 A1 (SUNTORY HOLDINGS LTD.) 02 March 2023 (2023-03-02)<br>claims, examples, drawings | 1-10 |

Form PCT/ISA/210 (second sheet) (July 2022)

| | INTERNATIONAL SEARCH REPORT<br>Information on patent family members | | International application No.<br>**PCT/JP2023/046322** |
|---|---|---|---|

| Patent document<br>cited in search report | Publication date<br>(day/month/year) | Patent family member(s) | Publication date<br>(day/month/year) |
|---|---|---|---|
| US 2021/0138718 A1 | 13 May 2021 | WO 2018/218264 A1<br>claims, drawings<br>EP 3630451 A1 | |
| WO 2023/026862 A1 | 02 March 2023 | TW 202319211 A<br>claims, examples, drawings | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020247053 A1
- US 2018281295 A1
- WO 2018218264 A
- JP 2022530927 T

**Non-patent literature cited in the description**

- *The bulletin of Hachinohe Institute of Technology*, 2007, vol. 26, 9-13